# NEUE EUROPÄISCHE PATENTSCHRIFT

(11) **EP 3 100 915 B2**
(45) Veröffentlichungstag und Bekanntmachung des Hinweises auf die Entscheidung über den Einspruch: **28.09.2022**
(45) Hinweis auf die Patenterteilung: 30.01.2019
(21) Anmeldenummer: 15170481.4
(22) Anmeldetag: 03.06.2015
(51) Int. Cl.: B60R 13/04, B29C 45/16

(54) **BAUTEIL**
COMPONENT
COMPOSANT

(43) Veröffentlichungstag der Anmeldung: 07.12.2016
(73) Patentinhaber: WEIDPLAS GmbH, 8630 Rüti (CH)
(72) Erfinder: Schelter, Daniel, 8853 Lachen (CH)
(74) Vertreter: Rutz, Andrea

(56) Entgegenhaltungen:
- EP-A1- 0 845 344
- EP-A1- 2 684 744
- DE-A1- 2 910 320
- DE-A1- 10 224 381
- DE-A1-102010 030 911
- DE-A1-102012 023 066
- JP-A- S59 199 227
- JP-A- S59 199 227
- US-A- 4 260 655
- US-A1- 2003 201 571
- US-A1- 2004 017 023
- Auszug aus Römpp, Chemie Lexikon - 1962
- Lehrbuch Oberflächentechnik, Klaus-Peter Müller, Vieweg + Teubner Vertag, 1996
- Wikipedia Auszug ''Viskosität?
- Wikipedia Auszug ?Filmbildner?

## Beschreibung

### TECHNISCHES GEBIET

Die vorliegende Erfindung betrifft ein Bauteil sowie ein Verfahren zur Herstellung eines derartigen Bauteils.

### STAND DER TECHNIK

Die EP 2 684 744 A1 beschreibt ein Zierteil für Kraftfahrzeuge mit einem Trägerteil aus einem im Spritzgussverfahren hergestellten thermoplastischen Kunststoffteil und einer Deckschicht. Die Deckschicht bildet die Sichtseite des Zierteiles. Die Deckschicht wird durch Überflutung des Trägerteils hergestellt, so dass die Deckschicht durch eine einzige zusammenhängende Schicht gebildet ist, welche somit eine einzige zusammenhängende Oberfläche bildet und welche eine einzige Farbe aufweist. Nachteilig bei diesem wie beschrieben hergestellten Zierteil ist, dass die Gestaltung der Sichtseite des Zierteils, insbesondere aufgrund der Art und Weise wie das Zierteil hergestellt ist, eingeschränkt ist.

Die DE 10 2010 030 911 A1 offenbart ein Formteil für ein Kraftfahrzeug, aufweisend ein Trägerteil sowie ein Deckteil, welches aus einem Metallblech gefertigt ist und Ausnehmungen aufweist. Zwischen dem Deckteil und dem Trägerteil ist eine Folie angeordnet, welche sich über die Ausnehmungen des Deckteils hinweg erstreckt und dadurch zusammen mit dem Deckteil eine Sichtfläche bildet.

Die US 4,260,655 zeigt eine Zierleiste für Kraftfahrzeuge. Die Zierleiste weist einen mittels Extrusion hergestellten Körper auf, und auf dessen Sichtseite chrom-ähnliche oder andere Dekorüberzüge angebracht sind.

In der DE 29 10 320 wird eine Abdeckleiste für Kraftfahrzeuge beschrieben, bei welcher eine dünne Metallschicht derart von Weich-PVC-Harz Extrusions-überzogen ist, dass die Metallschicht teilweise freiliegt.

Weitere gattungsgemässe Bauteile sind in den Dokumenten US 2004/0017023, JP S59 199227 und US 2003/201571 offenbart, wobei das Dokument US 2004/0017023 dem Oberbegriff des Anspruchs 1 entspricht.

### DARSTELLUNG DER ERFINDUNG

Es ist also eine Aufgabe der vorliegenden Erfindung, ein Bauteil der genannten Art zu schaffen, dessen Sichtseite vielseitiger gestaltet ist.

Zur Lösung dieser Aufgabe wird ein Bauteil vorgeschlagen, wie es in Anspruch 1 angegeben ist. Ausserdem wird in Anspruch 12 ein Verfahren zur Herstellung eines derartigen Bauteiles angegeben.

Die vorliegende Erfindung stellt also ein Bauteil zur Verfügung umfassend ein flächiges Dekorelement mit einer Vorderseite und einer Rückseite, wobei auf wenigstens zwei Bereichen der Vorderseite jeweils eine Deckschicht angeordnet ist, wobei die wenigstens zwei Deckschichten, insbesondere in der Draufsicht auf eine Sichtseite des Bauteils, vollständig voneinander beabstandet sind, und wobei die wenigstens zwei Deckschichten sowie wenigstens ein Bereich der Vorderseite des flächigen Dekorelementes gemeinsam die Sichtseite des Bauteils bilden.

Aufgrund der vollständigen Beabstandung der wenigstens zwei Deckschichten, bzw. aufgrund eines durchgehenden Spaltes zwischen den wenigstens zwei Deckschichten, ist durchgehend zwischen den wenigstens zwei Deckschichten ein Bereich der Vorderseite des flächigen Dekorelementes angeordnet und somit bilden beim erfindungsgemässen Bauteil die wenigstens zwei Deckschichten sowie wenigstens ein Bereich der Vorderseite des flächigen Dekorelementes gemeinsam die Sichtseite des Bauteils. Ein solches erfindungsgemäss ausgebildetes Bauteil weist den Vorteil auf, dass das Bauteil vielseitiger und somit ästhetischer ausgebildet ist. Eine vielseitigere und ästhetischere Ausgestaltung des erfindungsgemässen Bauteils ist insbesondere daher gegeben, da die wenigstens zwei Deckschichten wenigstens zwei Oberflächen der Sichtseite des Bauteils bilden sowie der wenigstens eine Bereich der Vorderseite des flächigen Dekorelementes wenigstens eine Oberfläche der Sichtseite des Bauteils bildet und somit wenigstens drei Oberflächen gemeinsam die Sichtseite des Bauteils bilden. Somit ist beim erfindungsgemässen Bauteil die Anzahl der die Sichtseite des Bauteils bildenden und individuell gestaltbaren Oberflächen grösser als bei Zierteilen des Standes der Technik. Von diesen wenigstens drei Oberflächen sind beispielsweise wenigstens zwei Oberflächen unterschiedlich ausgebildet. In diesem Zusammenhang bedeutet das Merkmal "unterschiedlich ausgebildet" beispielsweise, dass wenigstens die Farbe der Oberflächen, wenigstens die Strukturierung der Oberflächen oder wenigstens das Material aus welchem die Oberflächen gebildet sind, unterschiedlich ist. Selbstverständlich können sich beispielsweise die Oberflächen auch durch wenigstens zwei der genannten Parameter "Farbe", "Strukturierung", "Material" voneinander unterscheiden.

Das Merkmal, dass das Dekorelement des Bauteiles flächig ausgebildet ist, bedeutet, dass das Dekorelement entlang von zwei Dimensionen wesentlich grösser, insbesondere um ein Vielfaches grösser, dimensioniert ist als entlang einer dritten Dimension, welche sich in der Regel senkrecht zur Flächenausdehnung der Vorderseite des Dekorelementes erstreckt. Das flächige Dekorelement ist beispielsweise bandförmig, insbesondere als Band, ausgebildet.

Nach einer Weiterbildung der Erfindung sind die wenigstens zwei Bereiche wenigstens 0.3 Millimeter, bevorzugt wenigstens 1 Millimeter, bevorzugter wenigstens 2 Millimeter, voneinander beabstandet. Bevorzugt beträgt der maximale Abstand 10 Millimeter. Bei diesen Abmessungen ist ein Abschnitt des wenigstens einen Bereiches der Vorderseite des flächigen Dekorelementes, welcher zwischen den wenigstens zwei Deckschichten angeordnet ist, insbesondere in der Draufsicht auf die Sichtseite des Bauteils, besonders gut sichtbar und kann somit besonders gut ästhetisch wirksam werden.

Die wenigstens zwei Deckschichten weisen eine Dicke D im Bereich von 100 Mikrometer bis 1000 Mikrometer, bevorzugt im Bereich von 200 Mikrometer bis 800 Mikrometer, bevorzugter im Bereich von 400 bis 600 Mikrometer, noch bevorzugter im Bereich von 450 Mikrometer bis 550 Mikrometer, auf. Deckschichten mit den genannten Dicken, insbesondere Deckschichten mit einer Dicke im noch bevorzugteren Bereich, weisen eine gute Kratzfestigkeit auf und sind zudem, insbesondere mittels eines Spritzgiesswerkzeuges, gut herstellbar. Die gute Herstellbarkeit ist gegeben, da in einer Kavität, insbesondere eines Spritzgiesswerkzeuges, in welcher die Deckschicht gebildet werden soll, und welche eine Höhe aufweist, die etwa der Dicke der zu bildenden Deckschicht entspricht, das in die Kavität eingebrachte Material zur Bildung der Deckschicht aufgrund der genannte Höhe gut fliessen kann und daher die Kavität gut mit dem Material vollständig gefüllt werden kann.

Nach einer Weiterbildung der Erfindung ist wenigstens eine Deckschicht der wenigstens zwei Deckschichten aus einem opaken Material hergestellt. Bevorzugt sind sämtliche Deckschichten aus einem opaken Material hergestellt. Das opake Material ist bevorzugt Metall oder Kunststoff, bevorzugter Kunststoff. Diese Weiterbildung der Erfindung bietet den Vorteil, dass der jeweils unter einer opaken Deckschicht angeordnete Bereich des flächigen Dekorelementes durch die jeweilige opake Deckschicht abgedeckt und somit nicht sichtbar ist und somit das flächige Dekorelement aus einem vergleichsweise nicht so hochwertigen und somit kostengünstigen Material hergestellt sein kann.

Wenigstens eine Deckschicht der wenigstens zwei Deckschichten ist aus Kunststoff hergestellt. Der Kunststoff ist ein Lack, wie beispielsweise ein kratzfester Lack oder ein Softlack.

Nach einer Weiterbildung der Erfindung ist wenigstens eine jeweilige Deckschicht der wenigstens zwei Deckschichten relativ zu einem Bereich der Vorderseite des flächigen Dekorelementes, welcher, insbesondere in der Draufsicht auf die Sichtseite des Bauteils gesehen, die jeweilige Deckschicht wenigstens teilweise umrandet, wenigstens teilweise erhaben ausgebildet. Bevorzugt sind sämtliche Deckschichten wenigstens teilweise erhaben ausgebildet relativ zu einem Bereich der Vorderseite des flächigen Dekorelementes. Diese Weiterbildung der Erfindung bietet den Vorteil, dass durch die wenigstens teilweise Erhabenheit die designerische Gestaltungsfreiheit zunimmt.

Nach einer Weiterbildung der Erfindung bedecken die auf den wenigstens zwei Bereichen der Vorderseite des flächigen Dekorelementes angeordneten Deckschichten gemeinsam wenigstens 50% der Fläche der Vorderseite des flächigen Dekorelementes, bevorzugt wenigstens 75% der Fläche der Vorderseite des flächigen Dekorelementes, bevorzugter wenigstens 95% der Fläche der Vorderseite des flächigen Dekorelementes. Diese Weiterbildung der Erfindung bietet den Vorteil, dass bei den genannten prozentualen Bedeckungen der Vorderseite des flächigen Dekorelementes die Sichtseite des Bauteils eine besonders ästhetische Wirkung erzielt.

Nach einer Weiterbildung der Erfindung ist das flächige Dekorelement einstückig ausgebildet. Diese Weiterbildung der Erfindung bietet den Vorteil, dass das Bauteil besonders einfach hergestellt werden kann und eine optisch ansprechende Ausgestaltung aufweist.

Nach einer Weiterbildung der Erfindung ist das flächige Dekorelement aus Kunststoff hergestellt. Das flächige Dekorelement kann beispielsweise aber auch aus einem Metall, wie beispielsweise Aluminium, Stahl oder Edelstahl, oder aus einem anderen Material, wie beispielsweise Holz, hergestellt sein. Das genannte Holz wird beispielsweise hergestellt, indem das Holz in einem Autoklaven angeordnet und in den Autoklaven Wasserdampf eingeleitet wird, welches auf das Holz einwirkt. Nach der Entnahme des mit Wasserdampf bearbeiteten Holzes aus dem Autoklaven wird das bearbeitete Holz umgeformt und dann getrocknet. Falls das flächige Dekorelement aus Metall oder Kunststoff hergestellt ist, kann das flächige Dekorelement beispielsweise als Folie oder beispielsweise als selbsttragendes Bauteil ausgebildet sein. Falls das flächige Dekorelement eine Folie ist, so ist die Folie bevorzugt flexibel ausgebildet. Die Folie ist beispielsweise eine Kunststofffolie oder beispielsweise eine Metallfolie. Die Folie kann als funktionelle Folie ausgebildet sein, welche beispielsweise Elektronik aufweist, wobei die Elektronik bevorzugt auf die Folie aufgedruckt ist.

Nach einer Weiterbildung der Erfindung weist das flächige Dekorelement eine Dicke von einem Millimeter oder kleiner auf.

Nach einer Weiterbildung der Erfindung ist das flächige Dekorelement transluzent oder opak, bevorzugt transluzent, ausgebildet. Die opake Ausbildung des flächigen Dekorelementes bietet den Vorteil, dass ein im Bereich der Rückseite des flächigen Dekorelementes angeordneter Bestandteil des Bauteils in der Draufsicht auf die Sichtseite des Bauteils nicht sichtbar ist und somit die Ästhetik der Sichtseite des Bauteils nicht stört. Die transluzente Ausbildung des flächigen Dekorelementes bietet den Vorteil, dass von einem im Bereich der Rückseite des flächigen Dekorelementes angeordneten Leuchtmittel ausgestrahltes Licht durch das transluzent ausgebildete flächige Dekorelement hindurchtreten und sichtseitig des Bauteils wahrgenommen werden kann. Im Falle dass das Bauteil ein Leuchtmittel aufweist und somit das flächige Dekorelement transluzent ausgebildet ist, so ist bevorzugt wenigstens eine Deckschicht der wenigstens zwei Deckschichten, bevorzugter sind sämtliche Deckschichten, aus einem opaken Material hergestellt. Eine opak ausgebildete Deckschicht wird dann durch vom Leuchtmittel abgestrahltes Licht, bevorzugt im Einbauzustand des Bauteils, wie beispielsweise im Einbauzustand des Bauteils in einem Kraftfahrzeug, bevorzugt wenigstens teilweise, bevorzugter vollständig, umstrahlt, was besonders ästhetisch ist. Werden die opaken Deckschichten wenigstens teilweise, insbesondere vollständig von einem im Bereich der Rückseite des flächigen Dekorelementes angeordneten Leuchtmittel ausgestrahlten Licht umstrahlt, so erscheinen zudem die wenigstens zwei opaken Deckschichten, insbesondere in der Draufsicht auf die Sichtseite des Bauteils, als würden diese schweben. Bevorzugt ist das transluzent ausgebildete flächige Dekorelement aus transluzentem Kunststoff hergestellt. Im Falle dass das flächige Dekorelement aus Metall hergestellt und transluzent ausgebildet ist, so weist das flächige Dekorelement bevorzugt wenigstens einen Durchbruch auf durch welchen vom Leuchtmittel abgestrahltes durch das flächige Dekorelement hindurchtreten und von der Sichtseite des Bauteiles abgestrahlt werden kann.

Nach einer Weiterbildung der Erfindung ist am flächigen Dekorelement, bevorzugt an der Rückseite des flächigen Dekorelementes, wenigstens ein Befestigungsmittel zur Befestigung des Bauteils an einem Kraftfahrzeug einstückig angeformt, wobei das flächige Dekorelement bevorzugt aus Kunststoff hergestellt ist. Falls das flächige Dekorelement aus Kunststoff hergestellt ist, ist aufgrund der Einstückigkeit das Befestigungsmittel automatisch auch aus Kunststoff hergestellt. Ein solches am Kraftfahrzeug befestigbares Bauteil ist besonders einfach herstellbar, insbesondere falls das flächige Dekorelement aus Kunststoff hergestellt wird.

Nach einer Weiterbildung der Erfindung schliesst ein äusserer Bereich eines Randes wenigstens einer Deckschicht der wenigstens zwei Deckschichten bündig mit einem Rand des flächigen Dekorelementes ab. Bevorzugt schliesst ein äusserer Bereich eines Randes sämtlicher Deckschichten bündig mit einem Rand des flächigen Dekorelementes ab. Aufgrund des bündigen Abschlusses ist das Bauteil besser vor Beschädigungen geschützt.

Nach einer Weiterbildung der Erfindung weist das Bauteil eine Schutzschicht auf, welche wenigstens einen Teilbereich der Sichtseite des Bauteils bedeckt. Die Schutzschicht ist bevorzugt aus einem transluzenten Material hergestellt. Bevorzugt ist die Schutzschicht lösbar an der Sichtseite des Bauteils befestigt.

Nach einer Weiterbildung der Erfindung ist an der Rückseite des flächigen Dekorelementes, wenigstens eine Schicht, bevorzugt wenigstens eine Trägerschicht, angeordnet, wobei die Schicht bzw. die Trägerschicht aus einem opaken Material oder aus einem transluzenten Material hergestellt ist, bevorzugt aus einem transluzenten Material hergestellt ist, wobei bevorzugt das Material Kunststoff ist. Bevorzugt ist die wenigstens eine Schicht an der Rückseite des flächigen Dekorelementes befestigt. Diese Weiterbildung der Erfindung bietet den Vorteil, dass, aufgrund der wenigstens einen Schicht, flächige Dekorelemente mit einer geringen Dicke problemlos für die Herstellung des Bauteils verwendet werden können und ein solches Bauteil weiterhin eine ausreichende Steifigkeit aufweist. Ein solches flächiges Dekorelement mit vergleichsweise geringer Dicke kann beispielsweise eine Folie sein. Eine solche Folie weist beispielsweise eine Dicke im Bereich von 0.05 Millimeter bis 1 Millimeter, bevorzugt im Bereich von 0.1 Millimeter bis 0.3 Millimeter, auf. Die wenigstens eine Schicht weist bevorzugt eine Dicke von 1 Millimeter oder grösser auf. Bevorzugt weist die wenigstens eine Schicht eine maximale Dicke von 10 Millimeter auf. Falls die wenigstens eine Schicht aus thermoplastischem Kunststoff im Spritzguss hergestellt ist, weist die wenigstens eine Schicht bevorzugt eine maximale Dicke von 10 Millimeter auf, da, bei einer solchen Dicke, eine rasche Abkühlung der wenigstens einen Schicht nach deren Herstellung noch möglich ist.

Nach einer Weiterbildung der Erfindung umfasst das Bauteil wenigstens ein Leuchtmittel, welches derart angeordnet ist, dass mittels des Leuchtmittels die Rückseite des flächigen Dekorelements hinterleuchtbar ist. Das Leuchtmittel ist bevorzugt im Bereich der Rückseite des flächigen Dekorelementes angeordnet. Beim Leuchtmittel kann es sich beispielsweise um eine oder mehrere Leuchtdioden handeln. Möglich ist beispielsweise auch eine Leuchtfolie, insbesondere eine Elektrolumineszenzfolie oder OLED, oder eine Glühbirne. Falls im Bereich der Rückseite des flächigen Dekorelementes ein Leuchtmittel angeordnet ist und zwischen dem Leuchtmittel und der Rückseite des flächigen Dekorelementes die wenigstens eine Schicht derart angeordnet ist, so dass das vom Leuchtmittel emittierte Licht ausschliesslich über die wenigstens eine Schicht in das flächige Dekorelement gelangen kann, so ist das flächige Dekorelement aus einem transluzenten Material hergestellt sowie die wenigstens eine Schicht wenigstens bereichsweise, bevorzugt vollständig, aus einem transluzenten Material hergestellt, so dass das durch das Leuchtmittel emittierte Licht durch die wenigstens eine an der Rückseite des flächigen Dekorelementes angeordnete Schicht sowie durch das flächige Dekorelement hindurchtreten und von der Sichtseite des Bauteils abgestrahlt werden kann. Falls das Bauteil wenigstens eine an der Rückseite des flächigen Dekorelementes angeordnete Schicht aufweist, so kann ein allfälliges Leuchtmittel beispielsweise auch zwischen dem flächigen Dekorelement und der wenigstens einen Schicht angeordnet sein.

Das Bauteil ist bevorzugt als eine Zierleiste, ein Bedienelement, wie beispielsweise eine Taste oder insbesondere bevorzugt als eine Fuss- oder Einstiegsleiste eines Fahrzeugs, ausgebildet. Beim Fahrzeug handelt es sich bevorzugt um ein Kraftfahrzeug und insbesondere bevorzugt um ein strassengebundenes Kraftfahrzeug. Das Bauteil kann im Innenbereich und/oder im Aussenbereich des Fahrzeuges vorgesehen sein. Das Bauteil kann beispielsweise aber auch als eine Zierleiste oder ein Bedienelement eines Haushaltgerätes, wie beispielsweise eines Kühlschrankes, eines Dampfgarers, einer Waschmaschine, eines Backofens, eines Kochherdes, einer Geschirrspühlmaschine oder eines Möbels ausgebildet sein.

Es wird ausserdem eine Verfahren zur Herstellung eines Bauteiles angegeben, insbesondere eines Bauteiles wie es oben angegeben ist, umfassend folgende Schritte:
- Bereitstellen eines flächigen Dekorelementes mit einer Vorderseite und einer Rückseite;
- Anordnen jeweils einer Deckschicht auf wenigstens zwei Bereichen der Vorderseite des bereitgestellten flächigen Dekorelementes derart, dass die wenigstens zwei Deckschichten vollständig voneinander beabstandet sind und wobei die wenigstens zwei Deckschichten sowie wenigstens ein Bereich der Vorderseite des flächigen Dekorelementes gemeinsam die Sichtseite des Bauteils bilden.

Das erfindungsgemässe Verfahren bietet den Vorteil, dass mittels des Verfahrens eine automatisierte Serienfertigung von Bauteilen möglich ist, welche eine vielseitiger gestaltete Sichtseite aufweisen.

Erfindungsgemäss wird das flächige Dekorelement mit einer Vorderseite und einer Rückseite mittels eines Spritzgussverfahrens bereitgestellt. Dies bietet den Vorteil, dass das Bauteil einfach und kostengünstig hergestellt werden kann. Bevorzugt ist das Spritzgussverfahren ein Variotherm-Spritzgussverfahren. Dies bietet den Vorteil, dass während der Herstellung des flächigen Dekorelementes auf der Vorderseite des flächigen Dekorelementes das Entstehen von Einfallstellen vermieden werden kann. Bevorzugt wird während der Herstellung des flächigen Dekorelementes mittels des Spritzgussverfahrens die Rückseite des flächigen Dekorelementes mit Gas beaufschlagt. Dies bietet den Vorteil, dass während der Herstellung des flächigen Dekorelementes auf der Vorderseite des flächigen Dekorelementes das Entstehen von Einfallstellen vermieden werden kann. Selbstverständlich kann das flächige Dekorelement auch ein vorkonfektioniertes flächiges Dekorelement sein. Ein vorkonfektioniertes flächiges Dekorelement ist beispielsweise ein flächiges Dekorelement, welches beispielsweise vorgeschnitten, vorgeformt usw. ist.

Erfindungsgemäss wird das Anordnen jeweils einer Deckschicht auf wenigstens zwei Bereichen der Vorderseite des bereitgestellten flächigen Dekorelementes wie folgt durchgeführt bzw. umfasst folgende Schritte:
- Anordnen wenigstens eines Abdeckelementes auf den wenigstens zwei Bereichen des bereitgestellten flächigen Dekorelementes, so dass das wenigstens eine Abdeckelement jeweils gemeinsam mit jedem der wenigstens zwei Bereiche eine Kavität bildet;
- Einbringen jeweils eines fliessfähigen Materials in die wenigstens zwei gebildeten Kavitäten, so dass auf den wenigstens zwei Bereichen durch das Material jeweils die Deckschicht gebildet wird.

Dies bietet den Vorteil, dass auf beliebigen wenigstens zwei Bereichen der Vorderseite des Dekorelementes jeweils ein fliessfähiges Material, wie beispielsweise Kunststoff, aufgebracht werden kann, welches auf dem jeweiligen Bereich die Deckschicht bildet, wobei die wenigstens zwei Deckschichten, bevorzugt in der Draufsicht auf die Sichtseite des Bauteils gesehen, vollständig voneinander beabstandet bzw. voneinander getrennt angeordnet sind. Aufgrund der vollständigen Beabstandung bzw. der vollständig getrennten Anordnung der wenigstens zwei Deckschichten ist, bevorzugt in der Draufsicht auf die Sichtseite des Bauteils gesehen, wenigstens ein Teilbereich des flächigen Dekorelementes sichtbar welcher somit dekorativ wirksam werden kann. Das erfindungsgemässe Verfahren erlaubt somit, dass die Vorderseite des flächigen Dekorelementes bzw. die Sichtseite des Bauteils beliebig dekorativ gestaltet werden kann. Beispielsweise können sämtliche Deckschichten oder ein Anteil der wenigstens zwei Deckschichten beispielsweise wenigstens aus einem unterschiedlichen Material hergestellt sein, wenigstens eine unterschiedliche Oberflächenstrukturierung aufweisen oder wenigstens eine unterschiedliche Farbe aufweisen. Unterschiedlich sind Materialien zueinander im Sinne der Erfindung, falls diese eine unterschiedliche Zusammensetzung aufweisen. Falls Materialien identisch zueinander sind, weisen diese eine identische Zusammensetzung auf.

Das Material, welches jeweils in die wenigstens zwei Kavitäten eingebracht wird, so dass auf den wenigstens zwei Bereichen durch das Material jeweils die Deckschicht gebildet wird, ist ein Kunststoff in Form eines Lackes.

Nach einer Weiterbildung der Erfindung wird eine vorkonfektionierte Deckschicht auf wenigstens einem Bereich der wenigstens zwei Bereiche des bereitgestellten flächigen Dekorelements angeordnet.

Das Verfahren gemäss dieser Weiterbildung der Erfindung erlaubt die Herstellung eines Bauteils mit einem flächigen Dekorelement auf dessen Vorderseite einerseits wenigstens eine vorkonfektionierte Deckschicht, wie beispielsweise ein Metallblech oder eine Folie, und andererseits wenigstens eine auf der Vorderseite des flächigen Dekorelementes und während der Durchführung des erfindungsgemässen Verfahrens durch ein fliessfähiges Material gebildete Deckschicht angeordnet ist. Diese Weiterbildung der Erfindung ermöglicht somit eine erhöhte Designvariabilität des Bauteils. Eine vorkonfektionierte Deckschicht ist eine Deckschicht welche beispielsweise vorgeschnitten, vorgeformt usw. ist.

Nach einer Weiterbildung der Erfindung wird das Abdeckelement zusätzlich auf wenigstens einem Teilbereich der Vorderseite des flächigen Dekorelementes angeordnet, wobei ein jeweiliger Teilbereich wenigstens den Bereich beinhaltet auf welchem eine jeweilige vorkonfektionierte Deckschicht angeordnet ist, so dass wenigstens die vorkonfektionierte Deckschicht gemeinsam mit dem Abdeckelement eine Kavität bildet und wobei in die gebildete Kavität ein fliessfähiges Material eingebracht wird, so dass wenigstens auf der vorkonfektionierten Deckschicht, insbesondere wenigstens auf einer Vorderseite der vorkonfektionierten Deckschicht, eine Schutzschicht gebildet wird.

Nach einer Weiterbildung der Erfindung ist das Abdeckelement ein Bestandteil eines Spritzgusswerkzeuges, wobei das Spritzgusswerkzeug einen ersten Formteil und einen zweiten Formteil aufweist, wobei der erste Formteil das Abdeckelement bildet. Bevorzugt ist das bereitgestellte flächige Dekorelement im zweiten Formteil angeordnet. Diese Weiterbildung der Erfindung bietet den Vorteil, dass das Bauteil in Grossserien, und somit einfach und kostengünstig, hergestellt werden kann.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: schematisch eine räumliche Ansicht einer ersten Ausfuhrungsform eines erfindungsgemässen Bauteils;
- Fig. 2: schematisch eine Draufsicht auf das Bauteil gemäss Figur 1;
- Fig. 3: schematisch einen stark vergrösserten Querschnitt durch das Bauteil gemäss Figur 1;
- Fig. 4: schematisch eine Ansicht einer rückwärtigen Seite des Bauteils gemäss Figur 1;
- Fig. 5-12: schematisch Verfahrensschritte zur Herstellung einer zweiten Ausführungsform eines erfindungsgemässen Bauteils;
- Fig. 13-20: schematisch Verfahrensschritte zur Herstellung einer dritten Ausführungsform eines erfindungsgemässen Bauteils;
- Fig. 21: schematisch ein flächiges Dekorelement mit einer Schicht für die Herstellung des Bauteils gemäss Figur 12.

### BESCHREIBUNG BEVORZUGTER AUSFÜHRUNGSFORMEN

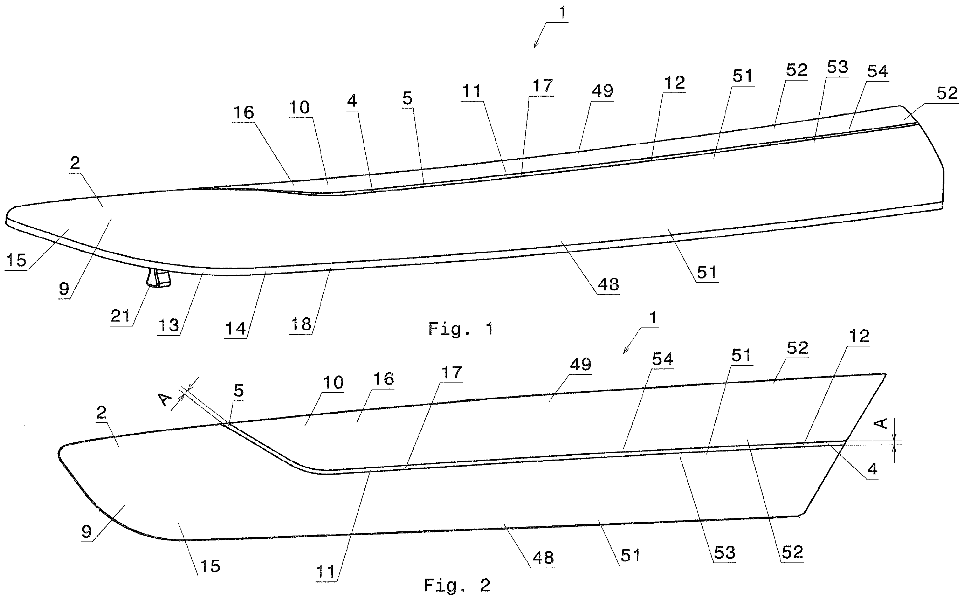

Bei den im Folgenden in den Figuren 1 bis 21 gezeigten Ausführungsformen sind gleiche, ähnliche oder ähnlich wirkende Merkmale jeweils mit den gleichen Bezugszeichen versehen.

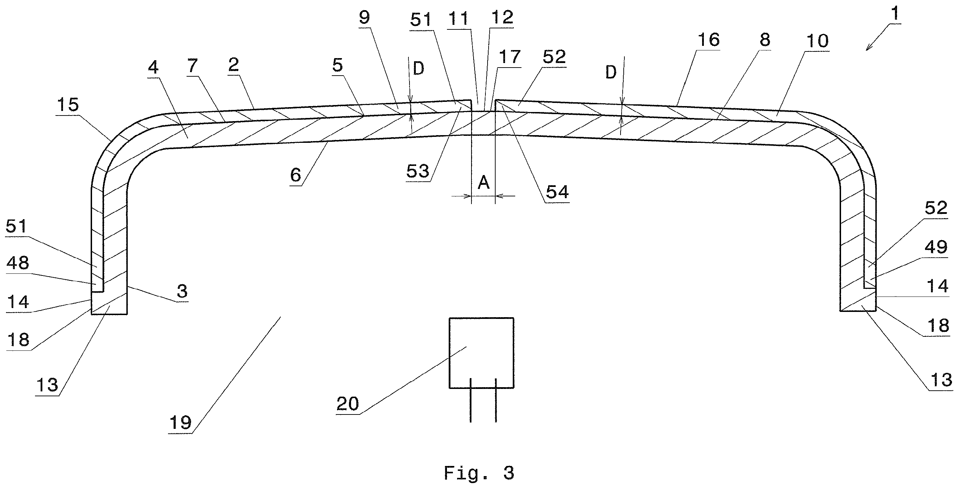

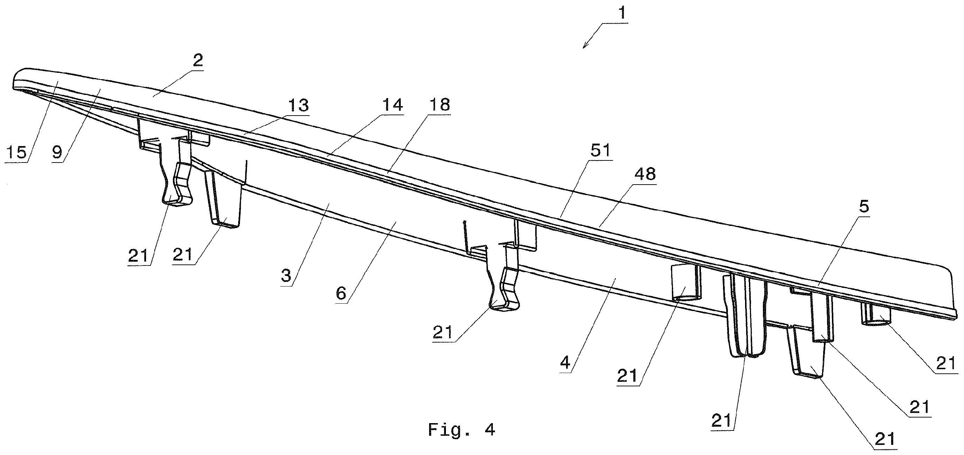

Die Figur 1 zeigt schematisch eine räumliche Ansicht einer ersten Ausführungsform eines erfindungsgemässen Bauteils. Die Figur 2 zeigt schematisch eine Draufsicht auf das Bauteil gemäss Figur 1. In Figur 3 ist schematisch ein stark vergrösserter Querschnitt durch das Bauteil gemäss Figur 1 gezeigt. Die Figur 4 zeigt schematisch eine Ansicht einer rückwärtigen Seite des Bauteils gemäss Figur 1.

Das erfindungsgemässe Bauteil 1 gemäss den Figuren 1 bis 4 weist eine Sichtseite 2 und eine rückwärtige Seite 3 auf. Das Bauteil 1 umfasst ein bandförmig ausgebildetes flächiges Dekorelement 4 mit einer Vorderseite 5 und einer Rückseite 6. Das flächige Dekorelement 4 ist bevorzugt, wie in der Figur 3 ersichtlich, einstückig hergestellt. Dies bietet den Vorteil, dass das Bauteil 1 besonders einfach hergestellt werden kann und eine optisch ansprechende Ausgestaltung aufweist. Auf zwei Bereichen der Vorderseite 5, d.h. auf einem ersten Bereich 7 und einem zweiten Bereich 8, ist jeweils eine Deckschicht angeordnet. Im Falle des Bauteils 1 ist auf dem ersten Bereich 7 eine erste Deckschicht 9 und auf dem zweiten Bereich 8 eine zweite Deckschicht 10 angeordnet. In den Figuren 1, 2, 3 ist ersichtlich, dass die erste Deckschicht 9 sowie die zweite Deckschicht 10 an der Sichtseite 2 des Bauteils 1 bzw. in der Draufsicht auf die Sichtseite 2 das Bauteils 1, vollständig voneinander beabstandet sind. Da die erste Deckschicht 9 sowie die zweite Deckschicht 10 vollständig voneinander beabstandet sind, ist, wie in den Figuren 1, 2, 3 erkennbar, ein durchgehender Spalt 11 zwischen der ersten Deckschicht 9 und der zweiten Deckschicht 10 vorhanden, so dass, insbesondere in der Draufsicht auf das Bauteil 1 gemäss der Figur 2, ein Bereich 12 der Vorderseite 5 des flächigen Dekorelementes 4 sichtbar ist, welcher durchgehend zwischen der ersten Deckschicht 9 und die zweiten Deckschicht 10 angeordnet ist.

Das flächige Dekorelement 4 weist, wie in den Figuren 1, 3, 4 ersichtlich, einen Rand 13 auf, welcher einen Bereich 14 der Vorderseite 5 des flächigen Dekorelementes 4 bildet.

Der Rand 13 schliesst bevorzugt, wie in den Figuren 1, 3, 4 ersichtlich, bündig mit einem äusseren Bereich 48 eines Randes 51 der ersten Deckschicht 9 und mit einem äusseren Bereich 49 eines Randes 52 der zweiten Deckschicht 10 ab. Aufgrund des bündigen Abschlusses ist das Bauteil 1 besser vor Beschädigungen geschützt.

Beim erfindungsgemässen Bauteil 1 bildet die erste Deckschicht 9 eine erste Oberfläche 15 der Sichtseite 2 des Bauteils 1 und die zweite Deckschicht 10 bildet eine zweite Oberfläche 16 der Sichtseite 2 des Bauteils 1. Eine dritte Oberfläche 17 der Sichtseite 2 des Bauteils 1 wird durch den Bereich 12 der Vorderseite 5 des flächigen Dekorelementes 4 gebildet und eine vierte Oberfläche 18 der Sichtseite 2 des Bauteils 1 wird durch den Bereich 14 der Vorderseite 5 des flächigen Dekorelementes 4 gebildet. Die Sichtseite 2 des Bauteils 1 wird somit gemeinsam durch die erste Deckschicht 9, die zweite Deckschicht 10 sowie den Bereichen 12, 14 des flächigen Dekorelementes 4 gebildet, beziehungsweise gemeinsam durch die erste Oberfläche 15, die zweiten Oberfläche 16, die dritte Oberfläche 17 sowie die vierte Oberfläche 18 gebildet. Die erste Oberfläche 15 sowie die zweite Oberfläche 16 können jeweils für sich individuell gestaltet werden. Da die Oberflächen 17 und 18 durch das flächige Dekorelement 4 gebildet werden, bilden die Oberflächen 17 und 18 gemeinsam eine individuell gestaltbare Oberfläche. Beim erfindungsgemässen Bauteil 1 wird somit die Sichtseite 2 des Bauteils 1 durch drei individuell gestaltbare Oberflächen gebildet und somit ist beim Bauteil 1 die Anzahl der die Sichtseite 2 des Bauteil 1 bildenden individuell gestaltbaren Oberflächen grösser als bei Zierteilen des Standes der Technik.

Die erste Deckschicht 9 sowie die zweite Deckschicht 10 bedecken gemeinsam bevorzugt wenigstens 50% der Fläche der Vorderseite 5 des flächigen Dekorelementes 4, bevorzugter wenigstens 75% der Fläche der Vorderseite 5 des flächigen Dekorelementes 4, noch bevorzugter wenigstens 95% der Fläche der Vorderseite 5 des flächigen Dekorelementes 4. Diese bevorzugten Ausführungsformen bieten den Vorteil, dass bei den genannten prozentualen Bedeckungen der Vorderseite 5 des flächigen Dekorelementes 4 durch die erste Deckschicht 9 sowie die zweite Deckschicht 10 das Bauteil 1 eine besonders ästhetische Wirkung erzielt. Bei dem in den Figuren 1 bis 4 dargestellten Bauteil 1 bedecken die erste Deckschicht 9 sowie die zweite Deckschicht 10 gemeinsam wenigstens 95% der Fläche der Vorderseite 5 des flächigen Dekorelementes 4.

Die erste Deckschicht 9 und / oder die zweite Deckschicht 10 können beispielsweise aus einem opaken Material hergestellt sein. Das opake Material ist ein Kunststoff in Form eines Lackes, wie beispielsweise ein kratzfester Lack oder ein Softlack. Die Herstellung einer Deckschicht aus Kunststoff erhöht die designerische Gestaltungsfreiheit, da der Kunststoff mit Farbstoffen versehen werden kann. Die opake Ausbildung der ersten Deckschicht 9 sowie der zweiten Deckschicht 10 bietet den Vorteil, dass die unter den Deckschichten 9, 10 angeordneten Bereiche 7, 8 des flächigen Dekorelementes 4 abgedeckt und somit nicht sichtbar sind und somit das flächige Dekorelement 4 aus einem vergleichsweise nicht so hochwertigen und somit kostengünstigen Material hergestellt sein kann. Die erste Deckschicht 9 und / oder die zweite Deckschicht 10 können beispielsweise aber auch durch ein transluzentes Material gebildet sein.

In der Draufsicht auf das Bauteil 1 (siehe Figur 2) ist ersichtlich, dass der Bereich 12 der Vorderseite 5 des flächigen Dekorelementes 4 sowohl die erste Deckschicht 9 als auch die zweite Deckschicht 10 teilweise umrandet. Anhand der Figuren 1, 2, 3 ist erkennbar, dass ein innerer Bereich 53 des Randes 51 der ersten Deckschicht 9 und ein innerer Bereich 54 des Randes 52 der zweiten Deckschicht 10 relativ zum Bereich 12 erhaben ausgebildet sind. Somit sind die Deckschichten 9, 10 teilweise erhaben ausgebildet relativ zum Bereich 12 der Vorderseite 5 des flächigen Dekorelementes 4. Durch die Erhabenheit können zusätzliche designerische Effekte erzielt werden.

Die Dicke D der ersten Deckschicht 9 und der zweiten Deckschicht 10 liegt im Bereich von 100 Mikrometer bis 1000 Mikrometer, bevorzugter im Bereich von 200 Mikrometer bis 800 Mikrometer, noch bevorzugter im Bereich von 400 bis 600 Mikrometer, am bevorzugtesten im Bereich von 450 Mikrometer bis 550 Mikrometer. Die erste Deckschicht 9 und die zweite Deckschicht 10 weisen jeweils am bevorzugtesten eine Dicke D im Bereich von 450 Mikrometer bis 550 Mikrometer auf. In diesem Bereich weisen die erste Deckschicht 9 und die zweite Deckschicht 10 eine gute Kratzfestigkeit auf und sind zudem, insbesondere mittels eines Spritzgiesswerkzeuges, gut herstellbar. Die gute Herstellbarkeit ist aus folgendem Grund gegeben: da die erste Deckschicht 9 sowie die zweite Deckschicht 10 in jeweils einer Kavität eines Spritzgiesswerkzeuges, gebildet werden, so weist eine jeweilige Kavität etwa eine Höhe von 450 Mikrometer bis 550 Mikrometer auf, bzw. eine jeweilige Kavität weist eine Höhe auf, welche etwa der Dicke D der jeweiligen zu bildenden Deckschicht entspricht. Bei der genannten Höhe der Kavitäten von 450 Mikrometer bis 550 Mikrometer kann das in die jeweilige Kavität eingebrachte Material zur Bildung der Deckschicht 9 bzw. der Deckschicht 10 immer noch gut fliessen und daher können die Kavitäten gut mit dem Material vollständig gefüllt werden.

Das flächige Dekorelement 4 ist bevorzugt transluzent oder opak ausgebildet. Bevorzugter ist das flächige Dekorelement 4 transluzent ausgebildet.

Falls das flächige Dekorelement 4 transluzent ausgebildet ist, ist das transluzente flächige Dekorelement 4 bevorzugt aus Metall, wie beispielsweise Aluminium, Stahl oder Edelstahl, oder aus Kunststoff, bevorzugter aus Kunststoff, hergestellt. Das flächige Dekorelement 4 kann beispielsweise aber auch aus Holz hergestellt sein. Im Falle von Metall oder Kunststoff ist das flächige Dekorelement 4 beispielsweise eine Folie, welche flexibel oder ein selbsttragendes Element ist, bevorzugt flexibel ist. Falls das flächige Dekorelement eine Folie ist, so weist die Folie beispielsweise eine Dicke im Bereich von 0.05 Millimeter bis 1 Millimeter, bevorzugt im Bereich von 0.1 Millimeter bis 0.3 Millimeter, auf. Die Folie kann beispielsweise als funktionelle Folie ausgebildet sein, wobei die funktionelle Folie beispielsweise eine Elektronik aufweist, welche bevorzugt auf die Folie aufgedruckt ist. Das flächige Dekorelement 4 weist beispielsweise eine Dicke von einem Millimeter oder kleiner auf.

Im vorliegenden Fall ist das flächige Dekorelement 4 des Bauteils 1 bevorzugt aus einem transluzenten Kunststoff hergestellt. Die Herstellung des flächigen Dekorelementes 4 aus Kunststoff erhöht die designerische Gestaltungsfreiheit, da die Kunststoffe mit Farbstoffen versehen werden können. Die transluzente Ausbildung des flächigen Dekorelementes 4 bietet zudem den Vorteil, dass von einem Leuchtmittel 20, welches im rückseitigen Bereich 19 des flächigen Dekorelementes 4 angeordnet ist, wie dies in der Figur 3 ersichtlich ist, abgestrahltes Licht durch das transluzent ausgebildete flächige Dekorelement 4 hindurchtreten und sichtseitig des Bauteils 1 wahrgenommen werden kann. Beim Leuchtmittel 20 kann es sich beispielsweise, wie in Figur 3 dargestellt, um eine Leuchtdiode oder mehrere Leuchtdioden handeln. Möglich ist beispielsweise auch eine Leuchtfolie, insbesondere eine Elektrolumineszenzfolie oder OLED, oder eine Glühbirne. Beim vorliegenden Bauteil 1 sind die erste Deckschicht 9 sowie die zweite Deckschicht 10 bevorzugt aus einem opaken Material hergestellt. Diese bevorzugte Ausführungsform bietet den Vorteil, dass bei der Ausbildung des flächigen Dekorelementes 4 aus einem transluzenten Kunststoff die erste Deckschicht 9 sowie die zweite Deckschicht 10 von vom Leuchtmittel 20 ausgesandten Licht, welches über die Bereiche 12 und 14 sichtseitig aus dem Bauteil 1 austritt, vollständig umstrahlt werden, was besonders ästhetisch ist. Durch die vollständige Umstrahlung (siehe in der Zusammenschau die Figuren 1, 2, 3 und 4) erscheinen zudem die Deckschichten 9 und 10, insbesondere in der Draufsicht auf die Sichtseite 2 das Bauteil 1, als würden diese schweben. Das in der Figur 3 dargestellte Leuchtmittel 20 ist der Einfachheit halber in den Figuren 1, 2, 4 nicht dargestellt. Im Einbauzustand des Bauteils 1 (nicht dargestellt), insbesondere im Einbauzustand des Bauteils 1 in einem Kraftfahrzeug (nicht dargestellt), sind die Deckschichten 9, 10 bevorzugt teilweise, bevorzugter vollständig, vom Leuchtmittel 20 emittierten Licht umstrahlbar.

Die erste Deckschicht 9 sowie die zweite Deckschicht 10 sind bevorzugt wenigstens 0.3 Millimeter, bevorzugter wenigstens 1 Millimeter, noch bevorzugter wenigstens 2 Millimeter, voneinander beabstandet, bzw. weisen zueinander einen Abstand A von bevorzugt wenigstens 0.3 Millimeter, bevorzugter wenigstens 1 Millimeter, noch bevorzugter wenigstens 2 Millimeter, auf. Bevorzugt beträgt der maximale Abstand 10 Millimeter. Bei diesen Abmessungen ist der Bereich 12 der Vorderseite 5 des Dekorelementes 4 besonders gut sichtbar und kann somit besonders gut ästhetisch wirksam werden. Zudem kann Licht besonders gut über einen derart dimensionierten Bereich 12 über die Sichtseite 2 des Bauteils 1 aus dem Bauteil 1 austreten. Wie in Figur 2 ersichtlich, ist der Abstand A über die Länge des Spaltes 11 konstant. Selbstverständlich kann der Abstand A über die Länge des Spaltes 11 auch variabel sein.

Falls das flächige Dekorelement 4 opak ausgebildet ist, ist das opake flächige Dekorelement 4 bevorzugt aus Metall oder Kunststoff, bevorzugt aus Kunststoff, hergestellt. Die opake Ausbildung des flächigen Dekorelementes 4 bietet den Vorteil, dass ein im Bereich 19 der Rückseite 6 des flächigen Dekorelementes 4 angeordneter Bestandteil des Bauteils 1, insbesondere in der Draufsicht auf die Sichtseite 2 des Bauteils 1, nicht sichtbar ist und somit die Ästhetik der Sichtseite 2 des Bauteils 1 nicht stört.

Um das Bauteil 1 beispielsweise an einem Fahrzeug, insbesondere an einer Karosserie des Fahrzeuges, zu befestigen, weist das Bauteil 1, bevorzugt an der Rückseite 6 des flächigen Dekorelementes 4 Befestigungsmittel 21 auf, welche bevorzugt einstückig am flächigen Dekorelement 4 angeformt sind. Dies ist in den Figuren 1, 4 ersichtlich. Sind die Befestigungsmittel 21 einstückig am flächigen Dekorelement 4 angeformt, so sind das flächige Dekorelement 4 sowie die Befestigungsmittel 21 aus demselben Material hergestellt. Ein solches am Kraftfahrzeug befestigbares Bauteil 1 ist besonders einfach herstellbar, insbesondere falls das flächige Dekorelement 4 und die Befestigungselemente 21 aus Kunststoff hergestellt werden. Die in den Figuren 1, 4 dargestellten Befestigungsmittel 21 sind der Einfachheit halber nicht in der Figur 3 dargestellt.

Das Bauteil 1 ist, wie in den Figuren 1 bis 4 ersichtlich, als Zierleiste ausgebildet. Selbstverständlich kann das Bauteil 1 beispielsweise auch als ein Bedienelement, wie beispielsweise eine Taste, oder beispielsweise als eine Fuss- oder Einstiegsleiste eines Fahrzeugs ausgebildet sein. Beim oben genannten Fahrzeug handelt es sich bevorzugt um ein Kraftfahrzeug und insbesondere bevorzugt um ein strassengebundenes Kraftfahrzeug. Das Bauteil 1 kann im Innenbereich und/oder im Aussenbereich des Fahrzeuges vorgesehen sein. Das Bauteil 1 kann beispielsweise aber auch als eine Zierleiste oder als ein Bedienelement eines Haushaltgerätes, wie beispielsweise eines Kühlschrankes, eines Dampfgarers, einer Waschmaschine, eines Backofens, eines Kochherdes, einer Geschirrspühlmaschine oder eines Möbels ausgebildet sein.

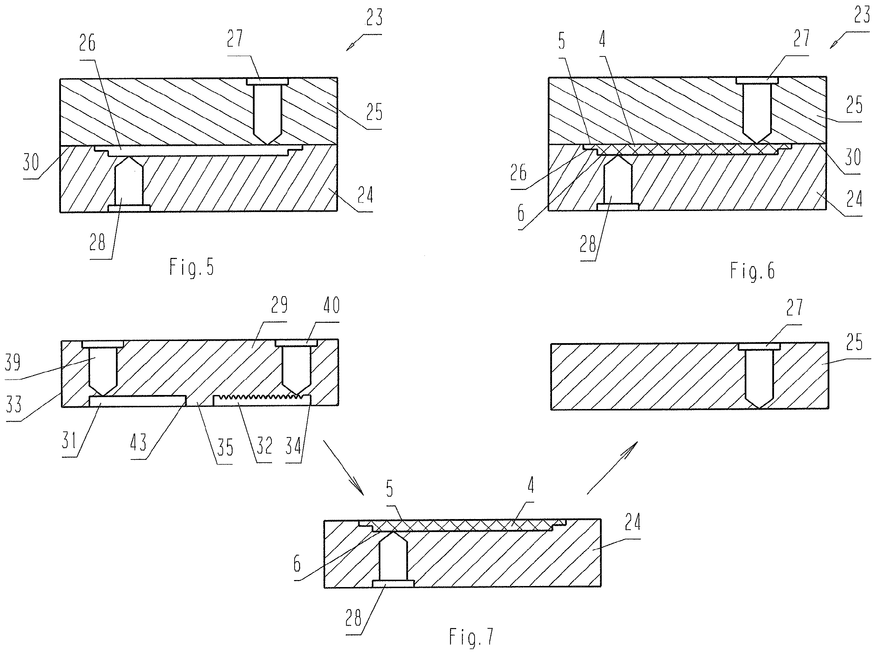

Im Folgenden werden anhand der schematischen Figuren 5 bis 12 Verfahrensschritte zur Herstellung einer zweiten Ausführungsform eines erfindungsgemässen Bauteils 1 beschrieben.

Die Herstellung der zweiten Ausführungsform eines erfindungsgemässen Bauteils 1 wird unter der Anwendung eines Spritzgussverfahrens beschrieben. Das in den Figuren 5 und 6 schematisch und im Schnitt dargestellte Spritzgusswerkzeug 23 umfasst einen ersten Formteil 24 sowie einen zweiten Formteil 25, wobei zwischen den beiden Formteilen 24 und 25, welche an einer Trennfläche 30 aneinanderliegen, eine Kavität 26 gebildet wird. Es wird nun ein fliessfähiges Material, insbesondere Kunststoff, über eine im zweiten Formteil 25 angeordnete Düse 27 in die Kavität 26 eingebracht und hierdurch in der Kavität 26 ein flächiges Dekorelement 4 mit einer Vorderseite 5 und einer Rückseite 6 gebildet bzw. bereitgestellt, welches in der Figur 6 dargestellt ist. Während der Herstellung bzw. der Bildung des flächigen Dekorelementes 4 wird die Rückseite 6 des flächigen Dekorelementes 4 bevorzugt mit Gas beaufschlagt (nicht dargestellt), das über eine Düse 28, welche im ersten Formteil 24 angeordnet ist, in die Kavität 26 eingebracht wird. Durch das Beaufschlagen der Rückseite 6 des flächigen Dekorelementes 4 mit Gas kann die Bildung von Einfallstellen auf der Vorderseite 5 des flächigen Dekorelementes 4 verhindert und somit ein flächiges Dekorelement 4 mit einer ästhetischen Vorderseite 5 bereitgestellt werden.

Nachdem das fliessfähige Material bevorzugt ausgehärtet ist, wird in einem nachfolgenden Verfahrensschritt, wie in der Figur 7 dargestellt, der zweite Formteil 25 durch ein, im Schnitt dargestelltes, Abdeckelement, welches als dritten Formteil 29 ausgebildet ist, ersetzt, wobei das gebildete flächige Dekorelement 4 weiterhin im ersten Formteil 24 angeordnet verbleibt. Wie in der Figur 7 ersichtlich, weist der dritte Formteil 29 eine erste Vertiefung 31 sowie eine zweite Vertiefung 32 auf, wobei beide Vertiefungen 31, 32 bezüglich einer Aussenseite 33 des dritten Formteils 29 offen ausgebildet sind. Die die zweite Vertiefung 32 begrenzende Oberfläche 34 ist, wie in der Figur 7 erkennbar, teilweise strukturiert.

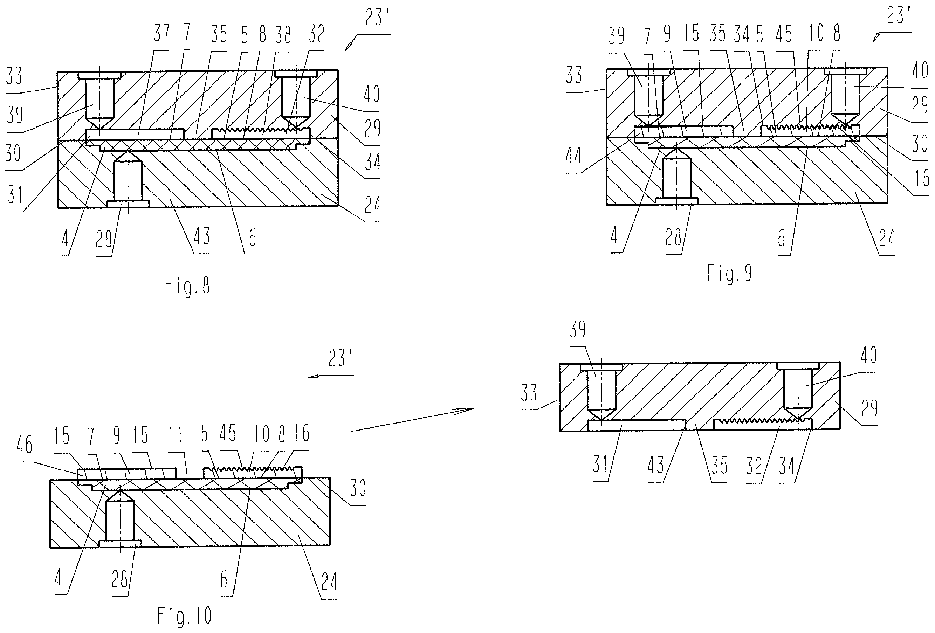

Durch das Ersetzen des zweiten Formteils 25 durch den dritten Formteil 29, wird, wie in Figur 8 erkennbar, ein Spritzgusswerkzeug 23' gebildet, bei welchem der dritte Formteil 29 auf bzw. über einem ersten Bereich 7 sowie einem zweiten Bereich 8 der Vorderseite 5 des flächigen Dekorelementes 4 angeordnet ist, so dass der dritte Formteil 29 jeweils gemeinsam mit jedem der zwei Bereiche 7, 8 eine Kavität bildet. Der dritte Formteil 29 bzw. dessen erste Vertiefung 31 bildet gemeinsam mit dem ersten Bereich 7 eine erste Kavität 37 und der zweite Bereich 8 bildet gemeinsam mit dem dritten Formteil 29 bzw. dessen zweiten Vertiefung 32 eine zweite Kavität 38. Über die in dem dritten Formteil 29 angeordnete Düse 39 wird nun als fliessfähiges Material ein Kunststoff in Form eines Lackes in die erste Kavität 37 eingebracht und hierdurch eine erste Deckschicht 9 auf dem ersten Bereich 7 der Vorderseite 5 des flächigen Dekorelementes 4 hergestellt (siehe Figur 9). Über die in dem Formteil 29 angeordnete Düse 40 wird ebenfalls als fliessfähiges Material ein Kunststoff in Form eines Lackes in die zweite Kavität 38 eingebracht und hierdurch eine zweite Deckschicht 10 auf dem zweiten Bereich 8 der Vorderseite 5 des flächigen Dekorelementes 4 hergestellt (siehe Figur 9). Die Herstellung der ersten Deckschicht 9 sowie die Herstellung der zweiten Deckschicht 10 kann zeitlich gleichzeitig oder zeitlich zueinander versetzt erfolgen. Das Material mittels welchem die erste Deckschicht 9 hergestellt ist kann identisch oder unterschiedlich zum Material sein aus welchem die zweite Deckschicht 10 hergestellt ist. Im Sinne dieser Erfindung sind zwei Materialien identisch, falls deren Zusammensetzung identisch ist. Zwei Materialien sind im Sinne dieser Erfindung unterschiedlich, falls deren Zusammensetzung unterschiedlich ist.

Die Kavitäten 37 und 38 sind durch einen Teilbereich 35 des Formteils 29, welcher auf der Vorderseite 5 des flächigen Dekorelementes 4 aufliegt und gegenüber der Vorderseite 5 des flächigen Dekorelementes 4 abdichtet, vollständig voneinander getrennt. Somit kann kein Material aus der ersten Kavität 37 entlang der Vorderseite 5 des flächigen Dekorelementes 4 in die zweite Kavität 38 und umgekehrt fliessen. Der Teilbereich 35 bewirkt zudem, dass beim herzustellenden Bauteil 1 die erste Deckschicht 9 durch einen Spalt 11 vollständig von der zweiten Deckschicht 10 getrennt ist (siehe die Figuren 10, 11, 12).

Aufgrund der teilweisen Strukturierung der die zweite Vertiefung 32 begrenzenden Oberfläche 34 des Formteils 29, weist ein Teilbereich 45 einer zweiten Oberfläche 16 der zweiten Deckschicht 10 eine dieser Strukturierung korrespondierende Oberflächenstrukturierung, welche beispielsweise eine Narbung sein kann, auf. Wie in den Figuren 7 und 8 ersichtlich, ist eine die erste Vertiefung 31 begrenzende Oberfläche 43 nicht strukturiert. Entsprechend ist eine erste Oberfläche 15 der ersten Deckschicht 9 vergleichsweise zum strukturierten Teilbereich 45 der zweiten Oberfläche 16 der zweiten Deckschicht 10 glatt ausgebildet (siehe die Figuren 9-12).

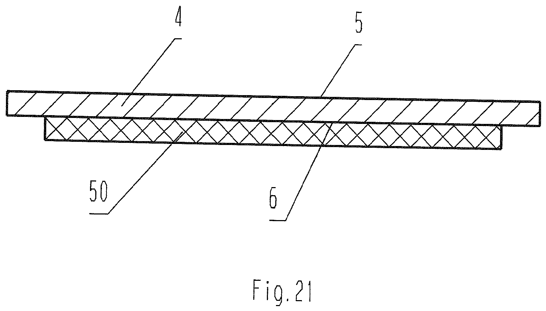

Alternativ zur Herstellung des flächigen Dekorelementes 4, wie im Zusammenhang mit den Figuren 5 und 6 beschrieben, kann auch ein vorkonfektioniertes flächiges Dekorelement 4 in die Kavität 26 des Spritzgusswerkzeuges 23' gemäss Figur 8 eingelegt und anschliessend die erste Deckschicht 9 und die zweite Deckschicht 10 auf dem vorkonfektionierten flächigen Dekorelement 4 hergestellt werden. In diesem Fall kann eine vereinfachte Form des Spritzgusswerkzeuges 23' eingesetzt werden, dessen erster Formteil 24 keine Düse 28 zur Injektion von Gas in die Kavität 26 mehr aufweist. Ein solches Dekorelement 4, an dessen Rückseite 6 gegebenenfalls eine Schicht 50, welche insbesondere als Trägerschicht ausgebildet ist, angeordnet sowie befestigt ist, ist in der Figur 21 dargestellt.

Nachdem die erste Deckschicht 9 und die zweite Deckschicht 10 gebildet sind, wird der Formteil 29 vom Formteil 24 abgehoben (siehe Figur 10) und eine Vorstufe 46 des herzustellenden erfindungsgemässen Bauteils 1 aus dem Spritzgusswerkzeug 23' entnommen.

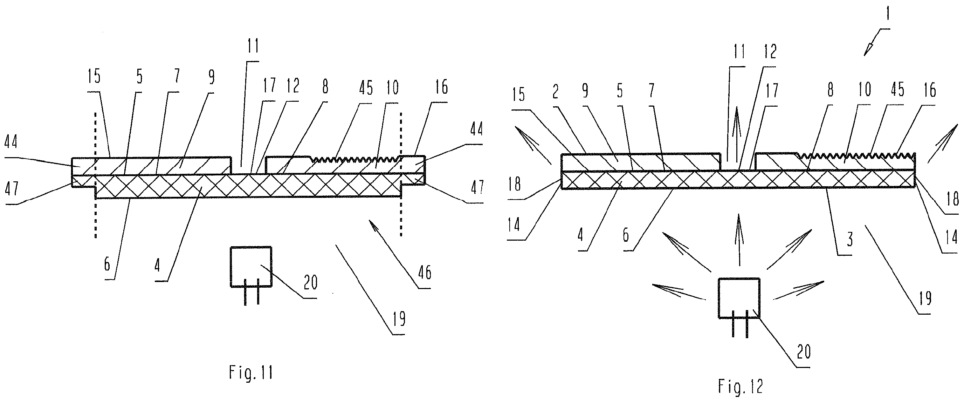

Nach der Entnahme der Vorstufe 46 werden Teilbereiche 47 eines umlaufenden Randes 44 der Vorstufe 46 abgetrennt. Es werden Teilbereiche 47 abgetrennt auf welchen jeweils eine Angusstelle sichtbar ist, die bei der Generierung der ersten Oberfläche 15 der ersten Deckschicht 9 bzw. die bei der Generierung der zweiten Oberfläche 16 der zweiten Deckschicht 10 entsteht. Die genannten Angüsse würden die ästhetische Qualität einer Sichtseite 2 des Bauteils 1 beeinträchtigen. Die Abtrennkanten sind in der Figur 11 mit gestrichelten Linien schematisch angegeben. Die Abtrennung der Teilbereiche 47 erfolgt beispielsweise mittels Schneiden, Fräsen oder Sägen. Danach wird bevorzugt, wie in der Figur 11 dargestellt, im Bereich 19 der Rückseite 6 des flächigen Dekorelementes 4 ein Leuchtmittel 20 angeordnet und somit die zweite Ausführungsform des erfindungsgemässen Bauteils 1 geschaffen, welche in der Figur 12 ersichtlich ist.

Wie in Figur 12 ersichtlich, sind beim Bauteil 1 die erste Deckschicht 9 sowie die zweite Deckschicht 10 durch einen Spalt 11 vollständig voneinander beabstandet, so dass, insbesondere in der Draufsicht auf die Sichtseite 2 des Bauteils 1 gemäss Figur 12 (nicht dargestellt), ein Bereich 12 der Vorderseite 5 des flächigen Dekorelementes 4 sichtbar ist, welcher durchgehend zwischen der ersten Deckschicht 9 und der zweiten Deckschicht 10 angeordnet ist. Zudem ist in Figur 12 erkennbar, dass die Oberflächen 15, 16, eine durch den Bereich 12 der Vorderseite 5 des flächigen Dekorelementes 4 gebildete dritte Oberfläche 17 sowie eine durch einen Bereich 14 der Vorderseite 5 des flächigen Dekorelementes 4 gebildete umlaufende vierte Oberfläche 18 gemeinsam die Sichtseite 2 des Bauteils 1 gemäss Figur 12 bilden.

Da die zweite Ausführungsform des erfindungsgemässen Bauteils 1 ein Leuchtmittel 20 aufweist, ist das flächige Dekorelement 4 bevorzugt aus einem transluzenten Material hergestellt und die erste Deckschicht 9 sowie die zweite Deckschicht 10 sind bevorzugt aus einem opaken Material hergestellt. Selbstverständlich kann die erste Deckschicht 9 und / oder die zweite Deckschicht 10 auch aus einem transluzenten Material hergestellt sein. Vom Leuchtmittel 20 abgestrahltes Licht kann nun durch das transluzente flächige Dekorelement 4 hindurchtreten und sodann über die zwischen der ersten Deckschicht 9 der zweiten Deckschicht 10 angeordnete dritte Oberfläche 17 sowie die umlaufende vierte Oberfläche 18 vom Bauteil 1 abgestrahlt werden. Das von vom Leuchtmittel 20 sowie das von der Sichtseite 2 abgestrahlte Licht ist in Figur 12 schematisch mittels Pfeilen dargestellt. Da die erste Deckschicht 9 sowie die zweite Deckschicht 10 des Bauteils 1 gemäss Figur 12 aus einem opaken Material hergestellt sind, werden die Deckschichten 9, 10 vom von der Sichtseite 2 abgestrahlten Licht umstrahlt, was besonders ästhetisch ist. Im Einbauzustand, falls beispielsweise das Bauteil 1 in einem Kraftfahrzeug verbaut ist, ist es selbstverständlich möglich, dass die umlaufende vierte Oberfläche 18 abgedeckt ist, so dass an der Sichtseite 2 des eingebauten Bauteils 1 nur das über die dritte Oberfläche 17 austretende Licht sichtbar ist.

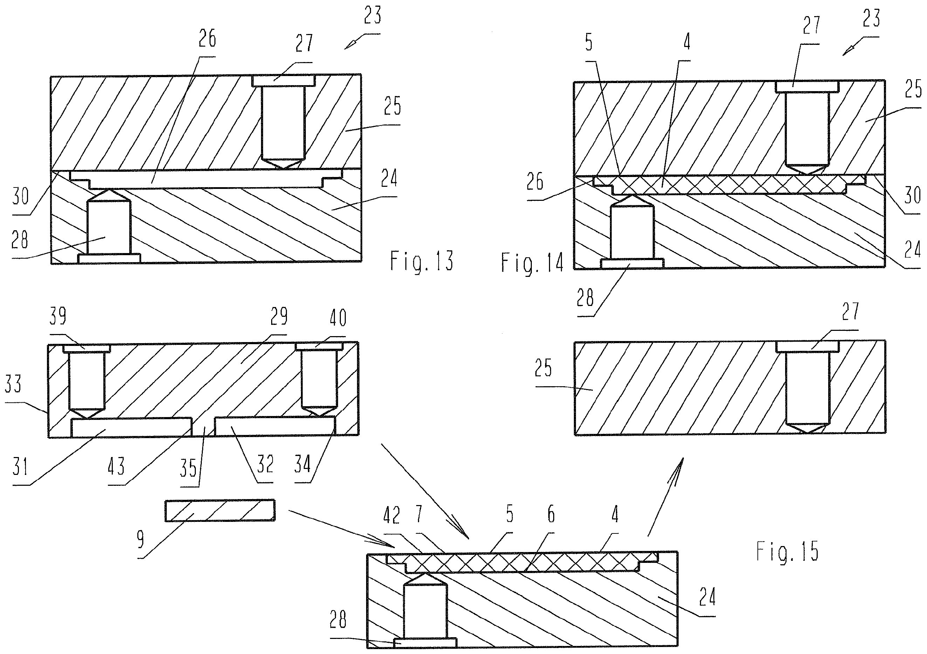

Im Folgenden werden anhand der schematischen Figuren 13 bis 20 Verfahrensschritte zur Herstellung einer dritten Ausführungsform eines erfindungsgemässen Bauteils 1 beschrieben. Die Figuren 13 bis 20 entsprechen im Wesentlichen den Figuren 5 bis 12. Um Wiederholungen zu vermeiden werden im Folgenden primär die Unterschiede zwischen der Herstellung der zweiten Ausführungsform des erfindungsgemässen Bauteils 1 und der Herstellung der dritten Ausführungsform des erfindungsgemässen Bauteils 1 beschrieben.

Wie in den Figuren 13 und 14 dargestellt, wird ein flächiges Dekorelement 4 auf identische Art hergestellt wie im Zusammenhang mit den Figuren 5, 6 beschrieben. Danach wird, wie bereits im Zusammenhang mit der Figur 7 beschrieben, der Formteil 25 durch ein Abdeckelement, welches als Formteil 29 ausgebildet ist, ersetzt (siehe die Figur 15). Bevor der Formteil 29 auf dem Formteil 24 angeordnet wird, wird auf einem ersten Bereich 7 der Vorderseite 5 des flächigen Dekorelementes 4 eine vorkonfektionierte erste Deckschicht 9 angeordnet.

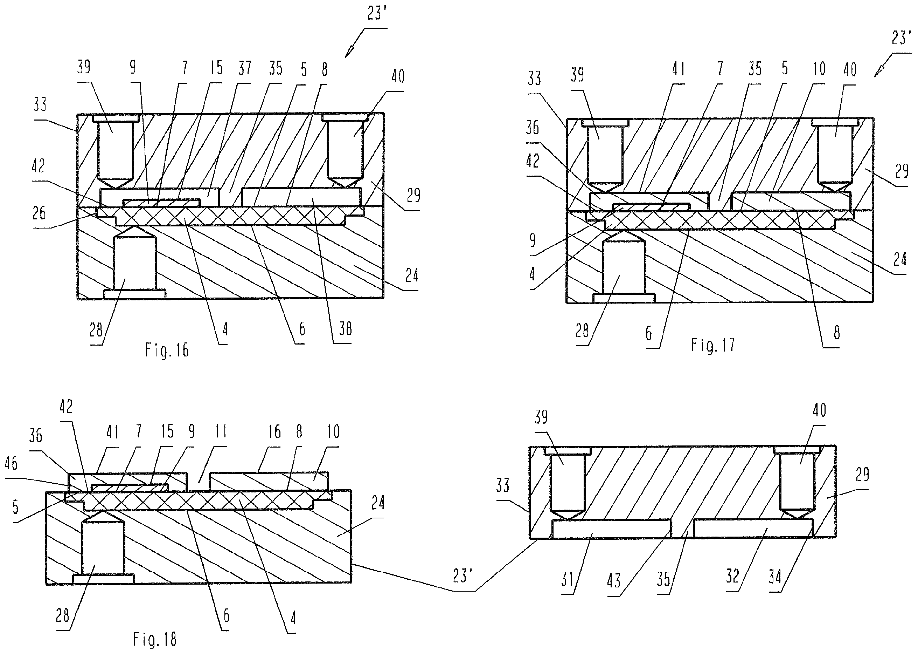

Nach erfolgter Anordnung der vorkonfektionierten ersten Deckschicht 9 wird, wie in der Figur 16 ersichtlich, der Formteil 29 auf einem Teilbereich 42 der Vorderseite 5 des flächigen Dekorelementes 4 angeordnet, welcher den ersten Bereich 7, auf welchem die vorkonfektionierte erste Deckschicht 9 angeordnet ist, beinhaltet. Somit bildet die vorkonfektionierte erste Deckschicht 9 gemeinsam mit dem Formteil 29 sowie dem Teilbereich 42 eine erste Kavität 37. Die vorkonfektionierte erste Deckschicht 9 ist beispielsweise aus Kunststoff oder Metall hergestellt. Der gemäss Figur 16 angeordnete Formteil 29 ist ausserdem auf einem zweiten Bereich 8 der Vorderseite 5 des flächigen Dekorelementes 4 angeordnet, wobei der Formteil 29 gemeinsam mit dem zweiten Bereich 8 eine zweite Kavität 38 bildet.

In die erste Kavität 37 sowie die zweite Kavität 38 wird jeweils ein fliessfähiges Material, wie beispielsweise ein Kunststoff, eingebracht. Die Zuführung des Materials in die Kavität 37 erfolgt über eine Düse 39 und die Zuführung von Material in die zweite Kavität 38 wird über eine Düse 40 bewerkstelligt. Das in die erste Kavität 37 eingebrachte Material, welches bevorzugt transluzent ist, überdeckt die vorkonfektionierte erste Deckschicht 9 teilweise und bildet auf der vorkonfektionierten ersten Deckschicht 9 eine Schutzschicht 36, wie dies in der Figur 17 ersichtlich ist. Durch das Einbringen von Material in die Kavität 38 wird eine zweite Deckschicht 10 gebildet.

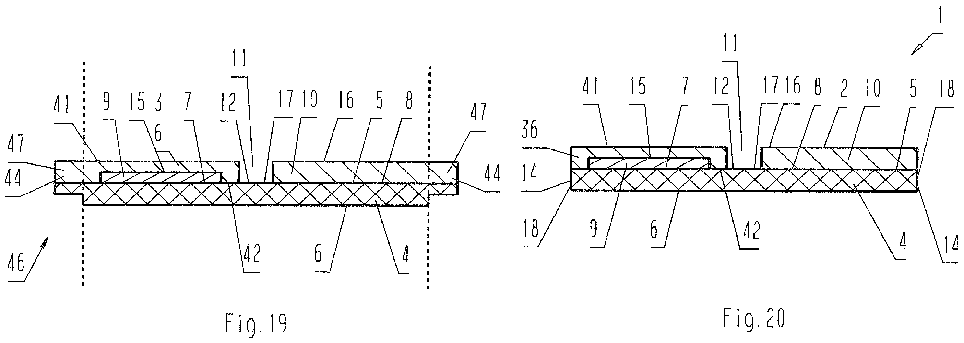

Nach der Bildung der Schutzschicht 36 sowie der zweiten Deckschicht 10, wird der Formteil 29 vom Formteil 24 abgehoben und eine Vorstufe 46 des herzustellenden erfindungsgemässen Bauteils 1 aus dem Spritzgusswerkzeug 23' entnommen (siehe die Figuren 18, 19).

Nach der Entnahme der Vorstufe 46 werden Teilbereiche 47 eines umlaufenden Randes 44 der Vorstufe 46 abgetrennt. Es werden Teilbereiche 47 abgetrennt auf welchen jeweils eine Angusstelle sichtbar ist, die bei der Generierung der Oberfläche 41 der Schutzschicht 36 entsteht, bzw. die bei der Generierung der zweiten Oberfläche 16 der zweiten Deckschicht 10 entsteht. Die Abtrennkanten sind in der Figur 19 mit gestrichelten Linien schematisch angegeben. Die Abtrennung der Teilbereiche 47 erfolgt beispielsweise mittels Schneiden, Fräsen oder Sägen.

Die dritte Ausführungsform des erfindungsgemässen Bauteils 1, welche in Figur 20 dargestellt ist, ist bevorzugt ohne Leuchtmittel 20 ausgebildet. Das flächige Dekorelement 4 sowie die erste vorkonfektionierte Deckschicht 9 sowie die zweite Deckschicht 10 sind daher bevorzugt aus einem Kunststoff gebildet, welcher bevorzugt opak ist. Die erste vorkonfektionierte Deckschicht 9 sowie die zweite Deckschicht 10 sind bevorzugt aus einem Kunststoff hergestellt, dessen Farbe kontrastierend zur Farbe des Kunststoffes ist aus welchem das flächige Dekorelement 4 hergestellt ist. Ein solches Bauteil 1 weist ein besonders ästhetisches Erscheinungsbild auf.

Wie in Figur 20 ersichtlich, sind bei der dritten Ausführungsform des erfindungsgemässen Bauteils 1 die erste vorkonfektionierte Deckschicht 9 sowie die zweite Deckschicht 10 durch einen Spalt 11 vollständig voneinander beabstandet, so dass, insbesondere in der Draufsicht auf die Sichtseite 2 des Bauteils 1 gemäss Figur 20, ein Bereich 12 der Vorderseite 5 des flächigen Dekorelementes 4 sichtbar ist, welcher durchgehend zwischen der ersten Deckschicht 9 und der zweiten Deckschicht 10 angeordnet ist (nicht dargestellt). Zudem ist in der Figur 20 erkennbar, dass eine durch die vorkonfektionierte Deckschicht 9 gebildete erste Oberfläche 15, die zweite Oberfläche 16, eine durch den Bereich 12 der Vorderseite 5 des flächigen Dekorelementes 4 gebildete dritte Oberfläche 17 sowie eine durch einen Bereich 14 der Vorderseite 5 des flächigen Dekorelementes 4 gebildete umlaufende vierte Oberfläche 18 gemeinsam die Sichtseite 2 des Bauteils 1 gemäss Figur 20 bilden. Des Weiteren ist in Figur 20 ersichtlich, dass das Bauteil 1 eine Schutzschicht 36 aufweist, welche bevorzugt aus einem transluzenten Material hergestellt ist, und welche einen Teilbereich der Sichtseite 2 des Bauteils 1 bedeckt.

Die vorstehende Erfindung ist selbstverständlich nicht auf die beschriebenen Ausführungsformen beschränkt, und eine Vielzahl von Abwandlungen ist möglich. Beispielsweise kann das Bauteil 1 gemäss den Figuren 1 bis 4 eine Schutzschicht aufweisen, welche wenigstens einen Teilbereich der Sichtseite 2 des Bauteils 1 bedeckt.

Diese Schutzschicht ist bevorzugt aus einem transluzenten Material hergestellt. Selbstverständlich kann entsprechend das Verfahren zur Herstellung des Bauteils 1 gemäss den Figuren 5 bis 12 beispielsweise derart modifiziert sein, dass die zweite Ausführungsform des Bauteils 1 gemäss der Figur 12 ebenfalls eine Schutzschicht aufweist, welche bevorzugt aus einem transluzenten Material hergestellt ist, und welche auf wenigstens einem Teilbereich der Sichtseite 2 des Bauteils 1 gemäss der Figur 12 angeordnet ist.

Zudem kann das Bauteil 1 gemäss den Figuren 1 bis 4, anstatt der zwei Deckschichten 9, 10, drei oder mehr als drei Deckschichten aufweisen, welche erfindungsgemäss an der Sichtseite 2 des Bauteils 1, bzw. in der Draufsicht auf die Sichtseite 2 das Bauteils 1, vollständig voneinander beabstandet sind. Entsprechend kann das Verfahren zur Herstellung des Bauteils 1 gemäss den Figuren 5 bis 12 beispielsweise derart modifiziert sein, dass das resultierende Bauteil 1 gemäss Figur 12, anstatt der Deckschichten 9, 10, drei oder mehr als drei Deckschichten aufweist, welche erfindungsgemäss an der Sichtseite 2 des Bauteils 1, bzw. in der Draufsicht auf die Sichtseite 2 das Bauteils 1, vollständig voneinander beabstandet sind. Entsprechend kann ebenfalls das Verfahren zur Herstellung des Bauteils 1 gemäss den Figuren 13 bis 20 beispielsweise derart modifiziert sein, dass das resultierende Bauteil 1 gemäss Figur 20, anstatt der Deckschichten 9, 10, drei oder mehr als drei Deckschichten aufweist, welche erfindungsgemäss an der Sichtseite 2 des Bauteils 1, bzw. in der Draufsicht auf die Sichtseite 2 das Bauteils 1, vollständig voneinander beabstandet sind. Eine Vielzahl weiterer Abwandlungen ist möglich.

**BEZUGSZEICHENLISTE**

| | | | |
|---|---|---|---|
| 1 | Bauteil | 32 | zweite Vertiefung |
| 2 | Sichtseite | 33 | Aussenseite |
| 3 | rückwärtige Seite | 34 | Oberfläche |
| 4 | flächiges Dekorelement | 35 | Teilbereich des Formteils 29 |
| 5 | Vorderseite | 36 | Schutzschicht |
| 6 | Rückseite | 37 | erste Kavität |
| 7 | erste Bereich | 38 | zweite Kavität |
| 8 | zweite Bereich | 39 | Düse |
| 9 | erste Deckschicht | 40 | Düse |
| 10 | zweite Deckschicht | 41 | Oberfläche der Schutzschicht 36 |
| 11 | Spalt | | |
| 12 | Bereich der Vorderseite 5 | 42 | Teilbereich der Vorderseite 5 des flächigen Dekorelementes 4 |
| 13 | Rand des flächigen Dekorelementes 4 | | |
| 14 | Bereich der Vorderseite 5 | 43 | Oberfläche |
| 15 | erste Oberfläche | 44 | Rand |
| 16 | zweite Oberfläche | 45 | Teilbereich der Oberfläche 16 |
| 17 | dritte Oberfläche | 46 | Vorstufe |
| 18 | vierte Oberfläche | 47 | Teilbereich des Randes 44 |
| 19 | rückseitiger Bereich | 48 | äusserer Bereich des Randes 51 |
| 20 | Leuchtmittel | | |
| 21 | Befestigungsmittel | 49 | äusserer Bereich des Randes 52 |
| 23, 23' | Spritzgusswerkzeug | | |
| 24 | erster Formteil | 50 | Schicht |
| 25 | zweiter Formteil | 51 | Rand der ersten Deckschicht 9 |
| 26 | Kavität | | |
| 27 | Düse | 52 | Rand der zweiten Deckschicht 10 |
| 28 | Düse | | |
| 29 | dritter Formteil | 53 | innerer Bereich des Randes 51 |
| 30 | Trennfläche | | |
| 31 | erste Vertiefung | | |
| 54 | innerer Bereich des Randes 52 | | |
| D | Dicke | | |
| A | Abstand | | |

## Patentansprüche

1. Bauteil (1) umfassend ein flächiges Dekorelement (4) mit einer Vorderseite (5) und einer Rückseite (6), wobei auf wenigstens zwei Bereichen (7, 8) der Vorderseite (5) jeweils eine Deckschicht (9, 10) angeordnet ist, wobei die wenigstens zwei Deckschichten (9, 10) vollständig voneinander beabstandet sind, und wobei die wenigstens zwei Deckschichten (9, 10) sowie wenigstens ein Bereich (12, 14) der Vorderseite (5) des flächigen Dekorelementes (4) gemeinsam eine Sichtseite (2) des Bauteils (1) bilden, und wobei das flächige Dekorelement (4) mittels eines Spritzgussverfahrens hergestellt ist, wobei wenigstens eine Deckschicht (9, 10) der wenigstens zwei Deckschichten (9, 10) aus einem Kunststoff hergestellt ist, und wobei entweder die wenigstens zwei Deckschichten (9, 10) mittels eines Spritzgiesswerkzeuges an das flächige Dekorelement (4)angespritzt sind oder wenigstens eine Deckschicht (9, 10) der wenigstens zwei Deckschichten (9, 10) eine vorkonfektionierte Deckschicht (9, 10) ist und wenigstens eine Deckschicht (9, 10) der wenigstens zwei Deckschichten (9, 10) mittels eines Spritzgiesswerkzeuges an das flächige Dekorelement (4) angespritzt ist, **dadurch gekennzeichnet, dass** der Kunststoff ein Lack ist und dass die wenigstens zwei Deckschichten (9, 10) eine Dicke (D) von 100 Mikrometer bis 1000 Mikrometer aufweisen.

2. Bauteil (1) nach Anspruch 1, **dadurch gekennzeichnet, dass** wenigstens eine Deckschicht (9, 10) aus einem opaken Material hergestellt ist.

3. Bauteil (1) nach Anspruch 1 oder 2, **dadurch gekennzeichnet, dass** wenigstens eine jeweilige Deckschicht (9, 10) wenigstens teilweise erhaben ausgebildet ist relativ zu einem Bereich (12) der Vorderseite (5) des flächigen Dekorelementes (4), welcher, insbesondere in der Draufsicht auf die Sichtseite (2) des Bauteils (1) gesehen, die jeweilige Deckschicht (9, 10) wenigstens teilweise umrandet.

4. Bauteil (1) nach einem der vorangehenden Ansprüche, **dadurch gekennzeichnet, dass** das flächige Dekorelement (4) transluzent oder opak, bevorzugt transluzent, ausgebildet ist.

5. Bauteil (1) nach Anspruch 4, **dadurch gekennzeichnet, dass** das flächige Dekorelement (4) transluzent ausgebildet ist, wobei das transluzent ausgebildete flächige Dekorelement (4) aus Metall oder Kunststoff, bevorzugt aus Kunststoff, hergestellt ist, wobei das aus Metall hergestellte transluzent ausgebildete flächige Dekorelement (4) bevorzugt wenigstens einen Durchbruch umfasst durch welchen Licht durch das flächige Dekorelement (4) hindurchscheinen kann.

6. Bauteil (1) nach Anspruch 4, **dadurch gekennzeichnet, dass** das flächige Dekorelement (4) opak ausgebildet ist, wobei das opak ausgebildete flächige Dekorelement (4) aus Metall oder Kunststoff, bevorzugt aus Kunststoff, hergestellt ist.

7. Bauteil (1) nach einem der vorangehenden Ansprüche, **dadurch gekennzeichnet, dass** am flächigen Dekorelement (4), bevorzugt an der Rückseite (6) des flächigen Dekorelementes (4), wenigstens eine Befestigungsmittel (21) zur Befestigung des Bauteils (1) an einem Kraftfahrzeug einstückig angeformt ist, wobei das flächige Dekorelement (4) bevorzugt aus Kunststoff hergestellt ist.

8. Bauteil (1) nach einem der vorangehenden Ansprüche, **dadurch gekennzeichnet, dass** ein äusserer Bereich (48, 49) eines Randes (51, 52) wenigstens einer Deckschicht (9, 10) bündig mit einem Rand (13) des flächigen Dekorelementes (4) abschliesst.

9. Bauteil (1) nach einem der vorangehenden Ansprüche, **dadurch gekennzeichnet, dass** an der Rückseite (6) des flächigen Dekorelementes (4) wenigstens eine Schicht (50), bevorzugt wenigstens eine Trägerschicht, angeordnet ist, wobei die Schicht (50) aus einem opaken Material oder aus einem transluzenten Material hergestellt ist, bevorzugt aus einem transluzenten Material hergestellt ist, wobei bevorzugt das transluzente Material Kunststoff ist.

10. Bauteil (1) nach einem der vorangehenden Ansprüche, **dadurch gekennzeichnet, dass** das Bauteil (1) wenigstens ein Leuchtmittel (20) umfasst welches derart angeordnet ist, so dass mittels des Leuchtmittels (20) die Rückseite (6) des flächigen Dekorelements (4) hinterleuchtbar ist.

11. Bauteil (1) nach einem der vorangehenden Ansprüche, **dadurch gekennzeichnet, dass** die Deckschichten (9, 10) auf den wenigstens zwei Bereichen (7, 8) der Vorderseite (5) des flächigen Dekorelementes (4) gemeinsam wenigstens 50% der Fläche der Vorderseite (5) des flächigen Dekorelementes (4), bevorzugt wenigstens 75% der Fläche der Vorderseite (5) des flächigen Dekorelementes (4), bevorzugter wenigstens 95% der Fläche der Vorderseite (5) des flächigen Dekorelementes (4), bedecken.

12. Verfahren zur Herstellung eines Bauteiles (1), insbesondere nach einem der Ansprüche 1 - 11, umfassend folgende Schritte:
- Bereitstellen eines flächigen Dekorelementes (4) mit einer Vorderseite (5) und einer Rückseite (6), wobei das flächige Dekorelement (4) mittels eines Spritzgussverfahrens bereitgestellt wird;
- Anordnen jeweils einer Deckschicht (9, 10) auf wenigstens zwei Bereichen (7, 8) der Vorderseite (5) des bereitgestellten flächigen Dekorelementes (4) derart, dass die wenigstens zwei Deckschichten (9, 10) vollständig voneinander beabstandet sind und wobei die wenigstens zwei Deckschichten (9, 10) sowie wenigstens ein Bereich (12, 14) der Vorderseite (5) des flächigen Dekorelementes (4) gemeinsam eine Sichtseite (2) des Bauteils (1) bilden,
**dadurch gekennzeichnet, dass** die wenigstens zwei Deckschichten (9, 10) eine Dicke (D) im Bereich von 100 Mikrometer bis 1000 Mikrometer aufweisen, und dass das Anordnen von jeweils einer Deckschicht (9, 10) auf den wenigstens zwei Bereichen (7, 8) der Vorderseite (5) des bereitgestellten flächigen Dekorelementes (4) wie folgt mittels eines Spritzgiesswerkzeuges durchgeführt wird:
- Anordnen wenigstens eines Abdeckelementes (29) auf den wenigstens zwei Bereichen (7, 8) des bereitgestellten flächigen Dekorelementes (4), so dass das wenigstens eine Abdeckelement (29) jeweils gemeinsam mit jedem der wenigstens zwei Bereiche (7, 8) eine Kavität (37, 38) bildet, die etwa der Dicke der zu bildenden Deckschicht entspricht;
- Einbringen jeweils eines fliessfähigen Kunststoffs in Form eines Lackes in die wenigstens zwei gebildeten Kavitäten (37, 38), so dass auf den wenigstens zwei Bereichen (7, 8) durch den Lack jeweils die Deckschicht (9, 10) gebildet wird.

13. Verfahren nach Anspruch 12, **dadurch gekennzeichnet, dass** das flächige Dekorelement (4) mit einer Vorderseite (5) und einer Rückseite (6) mittels eines Variotherm-Spritzgussverfahrens, bereitgestellt wird.

14. Verfahren nach Anspruch 12 oder 13, **dadurch gekennzeichnet, dass** während der Bereitstellung des flächigen Dekorelementes (4) mittels des Spritzgussverfahrens die Rückseite (6) des flächigen Dekorelementes (4) mit Gas beaufschlagt wird.

15. Verfahren nach einem der Ansprüche 12 bis 14, **dadurch gekennzeichnet, dass** eine vorkonfektionierte Deckschicht (9) auf wenigstens einem Bereich (7) der wenigstens zwei Bereiche (7, 8) des bereitgestellten flächigen Dekorelementes (4) angeordnet wird.

16. Verfahren nach Anspruch 15, **dadurch gekennzeichnet, dass** das Abdeckelement (29) zusätzlich auf wenigstens einem Teilbereich (42) der Vorderseite (5) des flächigen Dekorelementes (4) angeordnet wird, wobei ein jeweiliger Teilbereich (42) wenigstens den Bereich (7) beinhaltet auf welchem eine jeweilige vorkonfektionierte Deckschicht (9) angeordnet ist, so dass wenigstens die vorkonfektionierte Deckschicht (9) gemeinsam mit dem Abdeckelement (29) eine Kavität (37) bildet und wobei in die gebildete Kavität (37) ein fliessfähiges Material eingebracht wird, so dass wenigstens auf der vorkonfektionierten Deckschicht (9) eine Schutzschicht (36) gebildet wird.

17. Verfahren nach Anspruch 15 oder 16, **dadurch gekennzeichnet, dass** das Abdeckelement (29) ein Bestandteil eines Spritzgusswerkzeuges (23') ist, wobei das Spritzgusswerkzeug (23') einen ersten Formteil (24) und einen zweiten Formteil (25) aufweist, wobei der erste Formteil (24) das Abdeckelement (29) bildet und wobei bevorzugt das bereitgestellte flächige Dekorelement (4) im zweiten Formteil (25) angeordnet ist.

## Claims

1. A component (1) comprising a two-dimensionally extending decorative element (4) having a front side (5) and a rear side (6), wherein in each case a cover layer (9, 10) is disposed on at least two regions (7, 8) of the front side (5), wherein the at least two cover layers (9, 10) are completely spaced apart from one another, and wherein the at least two cover layers (9, 10) and at least one region (12, 14) of the front side (5) of the two-dimensionally extending decorative element (4) conjointly form a visible side (2) of the component (1), and wherein the two-dimensionally extending decorative element (4) is produced by means of an injection-molding method, wherein at least one cover layer (9, 10) of the at least two cover layers (9, 10) is produced from plastics, and wherein either the at least two cover layers (9, 10) are injection-molded onto the two-dimensionally extending decorative element (4) by means of an injection-molding tool or at least one cover layer (9, 10) of the at least two cover layers (9, 10) is a prefabricated cover layer (9, 10) and at least one cover layer (9, 10) of the at least two cover layers (9, 10) is injection-molded to the two-dimensionally extending decorative element (4) by means of an injection-molding tool, **characterized in that** the plastics is a lacquer and that the at least two cover layers (9, 10) have a thickness (D) of 100 micrometers to 1000 micrometers.

2. The component (1) as claimed in claim 1, **characterized in that** at least one cover layer (9, 10) is produced from an opaque material.

3. The component (1) as claimed in either of claims 1 and 2, **characterized in that** at least one respective cover layer (9, 10) is configured so as to be at least partially raised in relation to a region (12), of the front side (5) of the two-dimensionally extending decorative element (4), said region (12), in particular when viewed in the plan view of the visible side (2) of the component (1), at least partially bordering the respective cover layer (9, 10).

4. The component (1) as claimed in one of the preceding claims, **characterized in that** the two-dimensionally extending decorative element (4) is configured so as to be translucent or opaque, preferably translucent.

5. The component (1) as claimed in claim 4, **characterized in that** the two-dimensionally extending decorative element (4) is configured so as to be translucent, wherein the two-dimensionally extending decorative element (4) that is configured so as to be translucent is produced from metal or plastics, preferably from plastics, wherein the two-dimensionally extending decorative element (4) that is configured so as to be translucent and produced from metal preferably comprises at least one cut-out through which light can shine through the two-dimensionally extending decorative element (4).

6. The component (1) as claimed in claim 4, **characterized in that** the two-dimensionally extending decorative element (4) is configured so as to be opaque, wherein the two-dimensionally extending decorative element (4) that is configured so as to be opaque is produced from metal or plastics, preferably from plastics.

7. The component (1) as claimed in one of the preceding claims, **characterized in that** at least one fastening means (21) for fastening the component (1) to a motor vehicle is integrally molded to the two-dimensionally extending decorative element (4), preferably to the rear side (6) of the two-dimensionally extending decorative element (4), wherein the two-dimensionally extending decorative element (4) is preferably produced from plastics.

8. The component (1) as claimed in one of the preceding claims, **characterized in that** an outer region (48, 49) of a periphery (51, 52) of at least one cover layer (9, 10) terminates so as to be flush with a periphery (13) of the two-dimensionally extending decorative element (4).

9. The component (1) as claimed in one of the preceding claims, **characterized in that** at least one layer (50), preferably at least one support layer, is disposed on the rear side (6) of the two-dimensionally extending decorative element (4), wherein the layer (50) is produced from an opaque material or from a translucent material, is preferably produced from a translucent material, wherein the translucent material is preferably plastics.

10. The component (1) as claimed in one of the preceding claims, **characterized in that** the component (1) comprises at least one illumination means (20) that is disposed in such a manner that the rear side (6) of the two-dimensionally extending decorative element (4) can be backlit by means of the illumination means (20).

11. The component (1) as claimed in one of the preceding claims, **characterized in that** the cover layers (9, 10) on the at least two regions (7, 8) of the front side (5) of the two-dimensionally extending decorative element (4) conjointly cover at least 50% of the area of the front side (5) of the two-dimensionally extending decorative element (4), preferably at least 75% of the area of the front side (5) of the two-dimensionally extending decorative element (4), more preferably at least 95% of the area of the front side (5) of the two-dimensionally extending decorative element (4).

12. A method for the production of a component (1), in particular as claimed in one of claims 1 to 11, said method comprising the following steps:
- providing a two-dimensionally extending decorative element (4) having a front side (5) and a rear side (6), wherein the two-dimensionally extending decorative element (4) is provided by means of an injection-molding method;
- disposing in each case a cover layer (9, 10) on at least two regions (7, 8) of the front side (5) of the provided two-dimensionally extending decorative element (4) in such a manner that the at least two cover layers (9, 10) are completely spaced apart from one another and wherein the at least two cover layers (9, 10) and at least one region (12, 14) of the front side (5) of the two-dimensionally extending decorative element (4) conjointly form a visible side (2) of the component (1),
**characterized in that** the at least two cover layers (9, 10) have a thickness (D) in the range of 100 micrometers to 1000 micrometers, and that the disposing of in each case a cover layer (9, 10) on at least two regions (7, 8) of the front side (5) of the provided two-dimensionally extending decorative element (4) is carried out as follows by means of an injection- molding tool:
- disposing at least one cover element (29) on the at least two regions (7, 8) of the provided two-dimensionally extending decorative element (4), such that the at least one cover element (29) in each case conjointly with each of the at least two regions (7, 8) forms a cavity (37, 38) which corresponds approximately to the thickness of the cover layer to be formed;
- incorporating in each case a free-flowing plastics in form of a lacquer into the at least two cavities (37, 38) formed, such that the cover layer (9, 10) is in each case formed by the lacquer on the at least two regions (7, 8).

13. The method as claimed in claim 12, **characterized in that** the two-dimensionally extending decorative element (4) having a front side (5) and a rear side (6) is provided by means of an injection-molding method, preferably by means of a variotherm injection-molding method.

14. The method as claimed in claim 12 or 13, **characterized in that** the rear side (6) of the two-dimensionally extending decorative element (4) is impinged with gas during the provision of the two-dimensionally extending decorative element (4) by means of the injection-molding method.

15. The method as claimed in one of claims 12 to 14, **characterized in that** a prefabricated cover layer (9) is disposed on at least one region (7) of the at least two regions (7, 8) of the provided two-dimensionally extending decorative element (4).

16. The method as claimed in claim 15, **characterized in that** the cover element (29) is additionally disposed on at least a part-region (42) of the front side (5) of the two-dimensionally extending decorative element (4), wherein a respective part-region (42) includes at least that region (7) on which a respective prefabricated cover layer (9) is disposed such that at least the prefabricated cover layer (9) conjointly with the cover element (29) forms a cavity (37), and wherein a free-flowing material is incorporated into the cavity (37) formed such that a protective layer (36) is formed at least on the prefabricated cover layer (9).

17. The method as claimed in claim 15 or 16, **characterized in that** the cover element (29) is a component part of an injection-molding tool (23'), wherein the injection-molding tool (23') has a first mold part (24) and a second mold part (25), wherein the first mold part (24) forms the cover element (29) and wherein the provided two-dimensionally extending decorative element (4) is preferably disposed in the second mold part (25).

## Revendications

1. Composante (1) comprenant un élément décoratif plan (4) présentant un côté avant (5) et un côté arrière (6), où au moins une couche de couverture (9, 10) est disposée sur au moins deux zones (7, 8) du côté avant (5), respectivement, les au moins deux couches de couverture (9, 10) étant complètement séparées l'une de l'autre, et les au moins deux couches de couverture (9, 10) ainsi qu'au moins une zone (12, 14) du côté avant (5) de l'élément décoratif plan (4) formant ensemble un côté visible (2) de la composante (1), et l'élément décoratif plan (4) est réalisé au moyen d'un procédé d'injection-moulage, l'au moins une couche de couverture (9, 10) des au moins deux couches de couverture (9, 10) étant réalisée en matière synthétique, et ou bien les au moins deux couches de couverture (9, 10) sont réalisées au moyen d'un outil d'injection-moulage ou bien au moins une couche de couverture (9, 10) des au moins deux couches de couverture (9, 10) est une couche de couverture (9, 10) pré-confectionnée et au moins une couche de couverture (9, 10) des au moins deux couches de couverture (9, 10) est moulée par injection à l'élément décoratif plan (4) au moyen d'un outil d'injection-moulage, **caractérisée en ce que** la matière synthétique est une laque et que les au moins deux couches de couverture (9, 10) présentent une épaisseur de 100 micromètres à 1000 micromètres.

2. Composante (1) selon la revendication 1, **caractérisée en ce qu'**au moins une couche de couverture (9, 10) est réalisée en un matériau opaque.

3. Composante (1) selon la revendication 1 ou 2, **caractérisée en ce que** au moins une couche de couverture (9, 10) respective est réalisée de manière au moins partiellement surélevée par rapport à une zone (12) du côté avant (5) de l'élément décoratif plan (4), laquelle, en particulier vue en plan, sur le côté visible (2) de la composante (1) encadre au moins partiellement la couche de couverture (9, 10) respective.

4. Composante (1) selon une des revendications précédentes, **caractérisée en ce que** l'élément décoratif plan (4) est réalisé de manière translucide ou opaque, préférablement translucide.

5. Composante (1) selon la revendication 4, **caractérisée en ce que** l'élément décoratif plan (4) est réalisé de manière translucide, où l'élément décoratif plan (4) est réalisé de manière translucide est réalisé en métal ou matière synthétique, préférablement en matière synthétique, où l'élément décoratif plan (4) réalisé de manière translucide en métal présente préférablement une percée à travers laquelle de la lumière peux traverser l'élément décoratif plan (4).

6. Composante (1) selon la revendication 4, **caractérisée en ce que** l'élément décoratif plan (4) est réalisée de manière opaque, où l'élément décoratif plan (4) réalisé de manière opaque (4) est préférablement réalisé en métal ou matière synthétique, préférablement en matière synthétique.

7. Composante (1) selon une des revendications précédentes, **caractérisée** en ce sur l'élément décoratif plan (4), est formé en pièce unique un moyen de fixation (21) pour la fixation de la composante (1) à un véhicule automoteur, préférablement au niveau du côté arrière (6) de l'élément décoratif plan(4), où l'élément décoratif (4) est préférablement réalisé en matière synthétique.

8. Composante (1) selon une des revendications précédentes, **caractérisée en ce qu'**une zone extérieure (48, 49) d'un cadre (51, 52) finit au moins une couche de couverture (9,10) avec un bord (13) de l'élément décoratif plan (4) de manière affleurant.

9. Composante (1) selon une des revendications précédentes, **caractérisée en ce qu'**au niveau du côté arrière (6) de l'élément décoratif plan (4) au moins une couche (50), préférablement au moins une couche de support, est disposée, où la couche (50) est réalisée en matériau opaque ou un matériau translucide, préférablement est réalisée en un matériau translucide, où préférablement le matériau translucide est une matière synthétique.

10. Composante (1) selon une des revendications précédentes, **caractérisée en ce que** la composante (1) comprend au moins un moyen d'illumination (20) lequel est disposé de telle sorte que le côté arrière (6) de l'élément décoratif plan (4) peut être illuminé au moyen du moyen d'illumination (20).

11. Composante (1) selon une des revendications précédentes, **caractérisée en ce que** les couches de couverture (9, 10) recouvrent ensemble le côté avant (5) de l'élément décoratif plan (4) sur les au moins deux zones (7,8) au moins 50% de la surface du côté avant (5) de l'élément décoratif plan (4), préférablement au moins 75% de la surface du côté avant (5) de l'élément décoratif plan (4), plus préférablement au moins 95% de la surface du côté avant (5) de l'élément décoratif plan (4).

12. Un procédé pour la réalisation d'une composante (1), en particulier selon une des revendications 1 à 11, comprenant les étapes suivantes:
- prévoir un élément décoratif plan (4) ayant un côté avant (5) et un côté arrière (6), où l'élément décoratif plan (4) est réalisé au moyen d'un procédé d'injection-moulage;
- disposer respectivement une couche de couverture (9, 10) sur au moins deux zones (7, 8) du côté avant (5) de l'élément décoratif plan (4) prévu, de sorte que les au moins deux couches de couverture (9, 10) sont complètement séparées l'une de l'autre et où les au moins deux couches de couverture (9, 10) ainsi qu'au moins une zone (12, 14) du côté avant (5) de l'élément décoratif plan (4) forment ensemble un côté visible (2) de la composante (1),
**caractérisé en ce que** les au moins deux couches de couverture (9, 10) présentent une épaisseur (D) dans la plage de 100 micromètres à 1000 micromètres, et que la disposition de respectivement une couche de couverture (9, 10) sur les au moins deux zones (7, 8) du côté avant (5) de l'élément décoratif plan (4) prévu, est effectuée comme suit au moyen d'un outil d'injection-moulage:
- disposer au moins un élément de couverture (29) sur les au moins deux zones (7, 8) de l'élément décoratif plan (4) prévu, de sorte que au moins un élément de couverture (29), forme respectivement ensemble avec chacune des au moins deux zones (7, 8) une cavité (37, 38), qui approximativement correspond à l'épaisseur de la couche de couverture à réaliser;
- introduire respectivement une matière synthétique fluide en forme d'une laque dans les deux cavités formées (37, 38), de sorte que au moins sur les deux zones (7, 8) une couche de couverture (9, 10) est formée respectivement par la laque.

13. Procédé selon la revendication 12, **caractérisé en ce que** l'élément décoratif plan (4) ayant un côté avant (5) et ayant un côté arrière (6), est réalisée au moyen d'un procédé d'injectionmoulage variotherme.

14. Procédé selon une des revendications 12 ou 13, **caractérisé en ce que** pendant la mise à disposition de l'élément décoratif plan (4) au moyen d'un procédé d'injection-moulage, le côté arrière (6) de l'élément décoratif plan (4) est contacté avec un gaz.

15. Procédé selon une des revendications 12 à 14, **caractérisé en ce que** la couche de couverture (9) pré-confectionnée est disposée sur au moins une zone (7) des au moins deux zones (7, 8) de l'élément décoratif (4) prévu.

16. Procédé selon la revendication 15, **caractérisé en ce que** l'élément de couverture (29) est disposé en outre sur au moins une zone partielle (42) du côté avant (5) de l'élément décoratif plan (4), où respectivement une zone partielle (42) comprend au moins la zone (7) sur laquelle une couche de couverture pré-confectionnée (9) est respectivement disposée, de sorte que au moins la couche de couverture (9) pré-confectionnée forme ensemble avec l'élément de couverture (29)une cavité (37), et où dans la cavité (37) formée un matériau fluide est introduit, de sorte que au moins une couche de protection (36) est formée sur la couche de couverture pré-confectionnée (9).

17. Procédé selon la revendication 15 ou 16, **caractérisé en ce que** l'élément de couverture (29) est une partie d'un outil d'injection-moulage (23 '), où l'outil d'injection-moulage (23') présente un première outil de forme ( 24) et une deuxième outil de forme (25), où le premier outil de forme (24) forme l'élément de couverture (29) et où préférablement l'élément décoratif plan (4) prévu est disposé dans le deuxième outil de forme (25).
